(19) Europäisches Patentamt / European Patent Office / Office européen des brevets

(11) **EP 4 564 724 A1**

(12) **EUROPEAN PATENT APPLICATION**
published in accordance with Art. 153(4) EPC

(43) Date of publication:
04.06.2025 Bulletin 2025/23

(21) Application number: 23851952.4

(22) Date of filing: 10.08.2023

(51) International Patent Classification (IPC):
H04L 5/00 (2006.01)   H04L 1/18 (2023.01)

(52) Cooperative Patent Classification (CPC):
H04L 1/18; H04L 5/00

(86) International application number:
PCT/CN2023/112333

(87) International publication number:
WO 2024/032732 (15.02.2024 Gazette 2024/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 11.08.2022 CN 202210963819
30.09.2022 CN 202211213951

(71) Applicant: Huawei Technologies Co., Ltd.
Shenzhen, Guangdong 518129 (CN)

(72) Inventors:
• HUANG, Xiuxuan
  Shenzhen, Guangdong 518129 (CN)
• LI, Xinxian
  Shenzhen, Guangdong 518129 (CN)
• DING, Mengying
  Shenzhen, Guangdong 518129 (CN)
• PENG, Jinlin
  Shenzhen, Guangdong 518129 (CN)

(74) Representative: Gill Jennings & Every LLP
The Broadgate Tower
20 Primrose Street
London EC2A 2ES (GB)

(54) **HARQ-ACK CODEBOOK FEEDBACK METHOD AND COMMUNICATION APPARATUS**

(57) This application provides a HARQ-ACK codebook feedback method and a communication apparatus. The method includes: A network device sends one piece of DCI to a terminal, where the DCI is used to schedule N1 data channels in a plurality of cells, and the DCI includes a counter-downlink assignment index C-DAI. The terminal determines, based on the C-DAI, an arrangement order of HARQ feedback information of the N1 data channels in a HARQ-ACK codebook, and feeds back the HARQ-ACK codebook to the network device. In this solution, the terminal and the network device can have a consistent understanding of the HARQ-ACK codebook, to improve transmission reliability of the HARQ-ACK codebook.

400

| Network device | Terminal |

S401: Send first DCI, where the first DCI includes scheduling information of N1 data channels on W carriers, the first DCI includes a first C-DAI, W and N1 are integers greater than 1, and W is less than or equal to N1

S402: Send feedback information, where the feedback information includes a first HARQ-ACK codebook, the first HARQ-ACK codebook includes HARQ feedback information of N2 data channels, the N2 data channels include the N1 data channels, an arrangement order of HARQ feedback information of the N1 data channels in the first HARQ-ACK codebook is determined based on the first C-DAI, and N2 is an integer greater than or equal to 1

FIG. 4

## Description

This application claims priorities to Chinese Patent Application No. 202210963819.2, filed with the China National Intellectual Property Administration on August 11, 2022 and entitled "HARQ-ACK CODEBOOK FEEDBACK METHOD AND COMMUNICATION APPARATUS", and to Chinese Patent Application No. 202211213951.8, filed with the China National Intellectual Property Administration on September 30, 2022 and entitled "HARQ-ACK CODEBOOK FEEDBACK METHOD AND COMMUNICATION APPARATUS", which are incorporated herein by reference in their entireties.

## TECHNICAL FIELD

This application relates to the field of wireless communication, and more specifically, to a HARQ-ACK codebook feedback method and a communication apparatus.

## BACKGROUND

In a 5th generation (5th generation, 5G) mobile communication system, to reduce control signaling overheads and improve scheduling efficiency, it is proposed that in a carrier aggregation (carrier aggregation, CA) communication manner, data channels in a plurality of cells may be scheduled by using one piece of downlink control information (downlink control information, DCI). The data channel may be a physical downlink shared channel (physical downlink shared channel, PDSCH) or a physical uplink shared channel (physical uplink shared channel, PUSCH).

A hybrid automatic repeat request (hybrid automatic repeat request, HARQ) mechanism is an acknowledgment mechanism combining a forward error correction (forward error correction, FEC) technology and an automatic repeat request (automatic repeat request, ARQ) technology. A data receive end may notify, by sending feedback information, a data transmit end whether data is successfully received. However, a current HARQ mechanism is designed for scheduling a data channel of one cell by using one piece of DCI. When one piece of DCI can be used to schedule data channels in a plurality of cells, the HARQ mechanism further needs to be adaptively improved, so that the data receive end and the data transmit end reach a consensus on whether the data is correctly received.

## SUMMARY

Embodiments of this application provide a hybrid automatic repeat request-acknowledge HARQ-ACK codebook feedback method and a communication apparatus, to improve HARQ-ACK codebook feedback efficiency, so as to improve data transmission efficiency and reliability.

According to a first aspect, a HARQ-ACK codebook feedback method is provided. The method may be performed by a terminal or a module (for example, a chip) disposed in (or used in) the terminal. The following uses an example in which the terminal performs the method for description.

The method includes: The terminal receives first downlink control information (downlink control information, DCI) from a network device. The first DCI includes scheduling information of N1 data channels in W cells and a first counter-downlink assignment index (counter-downlink assignment index, C-DAI), W and N1 are integers greater than 1, and W is less than or equal to N1. The terminal sends feedback information including a first HARQ-ACK codebook to the network device. The first HARQ-ACK codebook includes HARQ feedback information of N2 data channels, N2 is an integer greater than 1, and the N2 data channels include the N1 data channels scheduled by using the first DCI. An arrangement order of HARQ feedback information of the N1 data channels in the first HARQ-ACK codebook is determined by the terminal based on the first C-DAI.

According to the foregoing solution, multi-cell scheduling DCI (that is, DCI for scheduling a plurality of data channels in a plurality of cells) sent by the network device to the terminal includes a C-DAI. The terminal and the network device determine, based on the C-DAI, an order of HARQ feedback information of the data channels in a HARQ-ACK codebook, so that the terminal and the network device have a consistent understanding of a HARQ-ACK codebook including HARQ feedback information of a plurality of data channels scheduled by using one piece of DCI. Even if the terminal misses detecting the DCI, the terminal may determine, based on the C-DAI, a correct order of the data channels in the HARQ-ACK codebook, to have a consistent understanding of the HARQ-ACK codebook with the network device, and improve transmission reliability of the HARQ-ACK codebook. Through reliable HARQ-ACK codebook feedback, the network device can retransmit a data block in time when the terminal fails to receive the data block, to improve transmission efficiency and reliability of the data block.

According to a second aspect, a HARQ-ACK codebook feedback method is provided. The method may be performed by a network device or a module (for example, a chip) disposed in (or used in) the network device. The following uses an example in which the network device performs the method for description.

The method includes: The network device sends first DCI to a terminal. The first DCI includes scheduling information of N1 data channels in W cells and a first C-DAI, W and N1 are integers greater than 1, and W is less than or equal to N1. The network device receives feedback information including a first HARQ-ACK codebook from the terminal. The first HARQ-ACK codebook includes HARQ feedback information of N2 data channels, N2 is an integer greater than 1, and the N2 data channels include the N1 data channels scheduled by using the first DCI. An arrangement order of HARQ feedback information of the N1 data channels in the first HARQ-ACK codebook is determined by the network device based on the first C-DAI.

In some implementations of the first aspect or the second aspect, the first C-DAI indicates a cumulative count value of the first DCI in DCI for scheduling the N2 data channels, and for the DCI for scheduling the N2 data channels, DCI on a same monitoring occasion is sequentially and cumulatively counted first in ascending order of serving cell indexes of cells on which the DCI is transmitted, and then in a time sequence of monitoring occasions to which the DCI belongs.

In other words, the first C-DAI indicates a cumulative count value obtained by performing counting on a pair of (serving cell, PDCCH monitoring occasion) first in ascending order of the serving cell indexes and then in the time sequence of the monitoring occasions until a current serving cell (that is, a serving cell in which the first DCI is located) and a current monitoring occasion (that is, a first monitoring occasion on which the first DCI is located).

According to the foregoing solution, the C-DAI specifically indicates the cumulative count value of the first DCI until the current monitoring occasion, so that the terminal can determine, based on the cumulative count value of the first DCI, the order of the HARQ feedback information of the data channels scheduled by using the first DCI in the HARQ-ACK codebook, to obtain the HARQ-ACK codebook. Correspondingly, the network device determines, based on the cumulative count value of the first DCI, the HARQ feedback information of the data channel scheduled by using the first DCI in the HARQ-ACK codebook, so that the terminal and the network device have a consistent understanding of the HARQ-ACK codebook, to improve the reliability of the HARQ-ACK codebook.

In some implementations of the first aspect or the second aspect, if a plurality of pieces of DCI in the DCI for scheduling the N2 data channels are on a same monitoring occasion and in a same cell, the plurality of pieces of DCI are sequentially and cumulatively counted in ascending order or descending order of serving cell indexes of cells on which reference data channels scheduled by using each DCI are transmitted.

In an example, the reference data channel scheduled by using the DCI is a data channel that is in data channels scheduled by using the DCI and that is located in a cell with a smallest serving cell index.

In another example, the reference data channel scheduled by using the DCI is a data channel that is in data channels scheduled by using the DCI and that is used to determine a time unit for sending HARQ feedback information.

According to the foregoing solution, if a plurality of pieces of multi-cell scheduling DCI are on a same monitoring occasion and in a same cell, the plurality of pieces of multi-cell scheduling DCI may be sorted based on the serving cell indexes of the cells in which the reference data channels are located, to reduce a case in which the terminal and the network device have inconsistent understandings of an order.

In some implementations of the first aspect or the second aspect, the first C-DAI in the first DCI indicates a cumulative count value of a scheduled data channel in the N2 data channels until the first DCI. For the N2 data channels, data channels scheduled by using DCI are cumulatively counted first on a same occasion in ascending order of serving cell indexes of cells in which the DCI for scheduling the data channel is located, and then in a time sequence of monitoring occasions to which the scheduling DCI belongs.

In other words, the first C-DAI indicates a cumulative count value obtained by performing counting on a pair of (PDCCH monitoring occasion, data channel) first in the time sequence of the monitoring occasions and then in ascending order of the serving cell indexes of the cells in which the DCI is located until the current monitoring occasion (that is, the first monitoring occasion on which the first DCI is located) and a carrier on which the current DCI (that is, the first DCI) is located.

According to the foregoing solution, the C-DAI specifically indicates a maximum cumulative count value of the scheduled data channel of the current DCI until the current monitoring occasion, so that the terminal can sort the HARQ feedback information of the data channel based on the cumulative count value of the data channel, to obtain the HARQ-ACK codebook. Correspondingly, the network device determines, based on the cumulative count value of the data channel, the HARQ feedback information of the data channels in the HARQ-ACK codebook, so that the terminal and the network device have a consistent understanding of the HARQ-ACK codebook, to improve the reliability of the HARQ-ACK codebook.

In some implementations of the first aspect or the second aspect, the first C-DAI indicates a cumulative count value of a data channel that is in the N1 data channels and that is located in a cell with a smallest serving cell index in the N2 data channels. For the N2 data channels, data channels on a same monitoring occasion are sequentially and cumulatively counted first in ascending order of serving cell indexes of cells in which the data channels on the same monitoring occasion are located, and then in a time sequence of monitoring occasions to which DCI for scheduling the data channel belongs.

According to the foregoing solution, the C-DAI indicates a cumulative count value of a data channel that is in data channels scheduled by using DCI in which the C-DAI is included and that is located in a cell with a smallest serving cell index, and the terminal may determine, based on a quantity of data channels scheduled by using the DCI and the cumulative count value indicated by the C-DAI, a cumulative count value of each scheduled data channel, to determine an order of the data channels in the HARQ-ACK codebook, and have a consistent understanding of the HARQ-ACK codebook with the network device.

In some implementations of the first aspect or the second aspect, the first DCI further includes a total-downlink assignment index (total-downlink assignment index, T-DAI).

In an example, the T-DAI indicates a total count value of a scheduled data channel in the N2 data channels until the first monitoring occasion. The first monitoring occasion is the monitoring occasion on which the first DCI is located.

In another example, the T-DAI indicates a total count value of the DCI for scheduling the N2 data channels until the first monitoring occasion.

According to the foregoing solution, when the multi-cell scheduling DCI includes the T-DAI, the terminal may determine a total quantity of DCI or data channels actually sent by the network device when the terminal does not detect a last piece of DCI before the HARQ-ACK codebook is fed back, to determine a correct size of the HARQ-ACK codebook, and have a consistent understanding of the HARQ-ACK codebook with the network device.

In some implementations of the first aspect or the second aspect, each piece of DCI for scheduling the N2 data channels is used to a plurality of data channels in a plurality of cells.

According to the foregoing solution, HARQ feedback information of a data channel scheduled by using DCI in a multi-cell scheduling manner is carried in one HARQ-ACK codebook. In other words, a C-DAI in the multi-cell scheduling DCI performs cumulative counting on the multi-cell scheduling DCI or the data channel scheduled by using the multi-cell scheduling DCI. This can reduce a problem that a plurality of scheduling manners are mixed to perform cumulative counting and HARQ feedback affects each other, to increase a HARQ feedback error probability.

In some implementations of the first aspect or the second aspect, the feedback information sent by the terminal further includes a second HARQ-ACK codebook. The second HARQ-ACK codebook includes HARQ feedback information of N3 data channels. DCI for scheduling each of the N3 data channels is used to schedule only one data channel.

In some implementations of the first aspect or the second aspect, the feedback information sent by the terminal further includes a third HARQ-ACK codebook. The third HARQ-ACK codebook includes HARQ feedback information of N4 data channels. DCI for scheduling each of the N4 data channels is used to schedule a plurality of data channels located in a plurality of time units.

According to the foregoing solution, cumulative counting is separately performed in different scheduling manners, so that a problem that the terminal has an inconsistent understanding of an overall HARQ-ACK codebook with the network device due to a misunderstanding of cumulation in a scheduling manner by the terminal can be reduced.

In some implementations of the first aspect or the second aspect, the first HARQ-ACK codebook includes K HARQ feedback information groups. K is a quantity of DCI for scheduling the N2 data channels, one HARQ feedback information group includes L1 pieces of HARQ feedback information, and the L1 pieces of HARQ feedback information include HARQ feedback information of a data channel scheduled by using one piece of DCI. L1 is a maximum quantity of data blocks scheduled by using one piece of DCI, L1 is greater than or equal to N1, and the data channel is used to carry at least one data block.

According to the foregoing solution, a quantity of HARQ feedback information corresponding to each piece of DCI in the first HARQ-ACK codebook is determined based on the maximum quantity of data blocks that can be scheduled by using each piece of DCI, so that the terminal and the network device can have a consistent understanding of the size of the HARQ-ACK codebook. Even if the terminal misses detecting one or more pieces of DCI, the quantity of HARQ feedback information corresponding to the DCI in the HARQ-ACK codebook can still be determined, so that a problem that the terminal and the network device have inconsistent understandings of the HARQ-ACK codebook because the terminal misses detecting the DCI can be reduced.

In some implementations of the first aspect or the second aspect, the first HARQ-ACK codebook includes K feedback information groups, one HARQ feedback information group includes L2 pieces of HARQ feedback information, the L2 pieces of HARQ feedback information include HARQ feedback information of a data channel group to which a data channel scheduled by using one piece of DCI belongs, L2 is less than or equal to N1, and L2 is a maximum quantity of data channel groups scheduled by using one piece of DCI.

According to the foregoing solution, the terminal groups a plurality of data channels scheduled by using the multi-cell scheduling DCI, and each data channel group feeds back one piece of HARQ feedback information, so that feedback overheads of the HARQ feedback information can be reduced, and resource utilization can be improved.

According to a third aspect, a communication apparatus is provided. In a design, the apparatus may include modules that are in one-to-one correspondence with the method/operations/steps/actions described in the first aspect. The modules may be hardware circuits or software, or may be implemented by a combination of the hardware circuits and the software. In a design, the apparatus includes a transceiver unit, configured to receive first DCI from a network device. The first DCI includes scheduling information of N1 data channels in W cells and a first counter-downlink assignment index C-DAI. W and N1 are integers greater than 1, and W is less than or equal to N1. A processing unit is configured to determine feedback information including a first HARQ-ACK codebook. The first HARQ-ACK codebook includes HARQ feedback information of N2 data channels, N2 is an integer greater than 1, and the N2 data channels include the N1 data channels. An arrangement order of HARQ feedback information of the N1 data channels in the first HARQ-ACK codebook is determined based on the first C-DAI. The transceiver unit is further configured to send the feedback information to the network device.

According to a fourth aspect, a communication apparatus is provided. In a design, the apparatus may include modules that are in one-to-one correspondence with the method/operations/steps/actions described in the second aspect. The modules may be hardware circuits or software, or may be implemented by a combination of the hardware circuits and the software. In a design, the apparatus includes a transceiver unit, configured to send first DCI to a terminal. The first DCI includes scheduling information of N1 data channels in W cells and a first counter-downlink assignment index C-DAI. W and N1 are integers greater than 1, and W is less than or equal to N1. The transceiver unit is further configured to receive feedback information from the terminal. The feedback information includes a first hybrid automatic repeat request-acknowledge HARQ-ACK codebook, the first HARQ-ACK codebook includes HARQ feedback information of N2 data channels, N2 is an integer greater than 1, and the N2 data channels include the N1 data channels. A processing unit is configured to determine an arrangement order of HARQ feedback information of the N1 data channels in the first HARQ-ACK codebook based on the first C-DAI.

According to a fifth aspect, a communication apparatus is provided, including a processor. The processor may implement the method in any one of the first aspect and the possible implementations of the first aspect. Optionally, the communication apparatus further includes a memory. The processor is coupled to the memory, and may be configured to execute instructions in the memory, to implement the method in any one of the first aspect and the possible implementations of the first aspect. Optionally, the communication apparatus further includes a communication interface, and the processor is coupled to the communication interface. In this embodiment of this application, the communication interface may be a transceiver, a pin, a circuit, a bus, a module, or another type of communication interface. This is not limited.

In an implementation, the communication apparatus is a terminal. When the communication apparatus is the terminal, the communication interface may be a transceiver or an input/output interface.

In another implementation, the communication apparatus is a chip disposed in the terminal. When the communication apparatus is the chip disposed in the terminal, the communication interface may be an input/output interface.

Optionally, the transceiver may be a transceiver circuit. Optionally, the input/output interface may be an input/output circuit.

According to a sixth aspect, a communication apparatus is provided, including a processor. The processor may implement the method in any one of the second aspect and the possible implementations of the second aspect. Optionally, the communication apparatus further includes a memory. The processor is coupled to the memory, and may be configured to execute instructions in the memory, to implement the method in any one of the second aspect and the possible implementations of the second aspect. Optionally, the communication apparatus further includes a communication interface, and the processor is coupled to the communication interface.

In an implementation, the communication apparatus is a network device. When the communication apparatus is the network device, the communication interface may be a transceiver or an input/output interface.

In another implementation, the communication apparatus is a chip disposed in the network device. When the communication apparatus is a chip disposed in a first network device, the communication interface may be an input/output interface.

Optionally, the transceiver may be a transceiver circuit. Optionally, the input/output interface may be an input/output circuit.

According to a seventh aspect, a processor is provided, including an input circuit, an output circuit, and a processing circuit. The processing circuit is configured to: receive a signal through the input circuit, and transmit a signal through the output circuit, so that the processor performs the method in any one of the first aspect or the second aspect or the possible implementations of the first aspect or the second aspect.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be, for example, but not limited to, received and input by a receiver, and a signal output by the output circuit may be, for example, but not limited to, output to a transmitter and transmitted by the transmitter. The input circuit and the output circuit may be a same circuit, and the circuit is used as the input circuit and the output circuit at different moments. Specific implementations of the processor and the various circuits are not limited in this embodiment of this application.

According to an eighth aspect, a computer program product is provided. The computer program product includes a computer program (which may also be referred to as code or instructions). When the computer program is run, a computer is enabled to perform the method in any one of the first aspect or the second aspect and the possible implementations of the first aspect or the second aspect.

According to a ninth aspect, a computer-readable storage medium is provided. The computer-readable storage medium stores a computer program (which may also be referred to as code or instructions). When the computer-readable storage medium is run on a computer, the computer is enabled to perform the method in any one of the first aspect or the second aspect and the possible implementations of the first aspect or the second aspect.

According to a tenth aspect, a communication system is provided, including the foregoing at least one terminal and at least one network device.

## BRIEF DESCRIPTION OF DRAWINGS

FIG. 1 is a diagram of an architecture of a communication system 1000 to which an embodiment of this application is applied;

FIG. 2 is a diagram of a PDCCH monitoring occasion according to an embodiment of this application;

FIG. 3 is a diagram of a HARQ feedback time sequence relationship according to an embodiment of this application;

FIG. 4 is a schematic flowchart of a HARQ-ACK codebook feedback method according to an embodiment of this application;

FIG. 5 to FIG. 8 are diagrams of a HARQ-ACK codebook feedback method according to an embodiment of this application;

FIG. 8A is a diagram of a HARQ-ACK codebook feedback method based on a carrier set according to an embodiment of this application;

FIG. 9 to FIG. 13 are diagrams of a HARQ-ACK codebook feedback method according to an embodiment of this application;

FIG. 14 is a diagram of a HARQ-ACK codebook according to an embodiment of this application;

FIG. 15 is another diagram of a HARQ-ACK codebook feedback method according to an embodiment of this application;

FIG. 15A is a diagram of a HARQ-ACK codebook feedback method based on a joint cumulative counting manner according to an embodiment of this application;

FIG. 16 is a diagram of a structure of a communication apparatus according to an embodiment of this application; and

FIG. 17 is another diagram of a structure of a communication apparatus according to an embodiment of this application.

## DESCRIPTION OF EMBODIMENTS

In embodiments of this application, "/" may indicate an "or" relationship between associated objects, for example, A/B may indicate A or B; and "and/or" may indicate that three relationships exist between the associated objects, for example, A and/or B may indicate the following three cases: A exists alone, both A and B exist, and B exists alone, where A and B may be singular or plural. For ease of describing technical solutions in embodiments of this application, in embodiments of this application, terms such as "first" and "second" may be used to distinguish between technical features with a same or similar function. The terms such as "first" and "second" do not limit a quantity and an execution sequence, and the terms such as "first" and "second" do not indicate a definite difference.

The technical solutions in embodiments of this application may be applied to various mobile communication systems, for example, a long term evolution (long term evolution, LTE) system, a 5G mobile communication system and a future mobile communication system (for example, a 6th generation (6th generation, 6G) communication system), or a system integrating a plurality of communication systems. This is not limited in embodiments of this application.

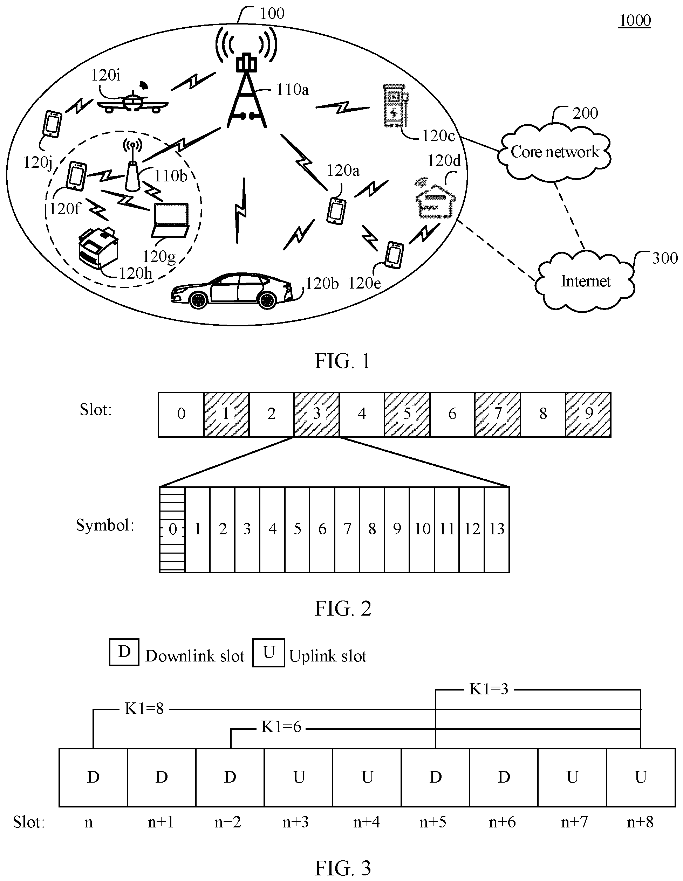

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. The core network device and the radio access network device may be independent different physical devices, or a function of the core network device and a logical function of the radio access network device may be integrated into a same physical device, or a part of functions of the core network device and a part of functions of the radio access network device may be integrated into a physical device. The terminals may be connected to each other and the radio access network devices may be connected to each other in a wired or wireless manner. FIG. 1 is only a diagram. The communication system may further include another network device, for example, may further include a wireless relay device and a wireless backhaul device. The wireless relay device and the wireless backhaul device are not shown in FIG. 1.

The radio access network device is an access device used by the terminal to access the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation NodeB in a 6G mobile communication system, a base station in a future mobile communication system, an access node in a Wi-Fi system, or the like; or may be a module or a unit that implements some functions of the base station, for example, may be a central unit (central unit, CU), or may be a distributed unit (distributed unit, DU). The CU herein implements functions of a radio resource control protocol and a packet data convergence protocol (packet data convergence protocol, PDCP) of the base station, and may further implement a function of a service data adaptation protocol (service data adaptation protocol, SDAP). The DU implements functions of a radio link control layer and a medium access control (medium access control, MAC) layer of the base station, and may further implement a part or all of functions of a physical layer. For specific descriptions of the foregoing protocol layers, refer to technical specifications related to the 3rd generation partnership project (3rd generation partnership project, 3GPP). The radio access network device may be a macro base station (for example, 110a in FIG. 1), may be a micro base station or an indoor station (for example, 110b in FIG. 1), or may be a relay node, a donor node, or the like. A specific technology and a specific device form that are used by the radio access network device are not limited in embodiments of this application. For ease of description, the following uses an example in which the base station is used as the radio access network device for description.

The terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, a smart grid, smart furniture, a smart office, a smart wearable, smart transportation, and a smart city. The terminal may be a mobile phone, a tablet computer, a computer having a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a handheld device, or a vehicle-mounted device, may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for terminals 120j accessing the radio access network 100 through 120i, the terminal 120i is a base station. However, for the base station 110a, 120i is a terminal. In other words, communication between 110a and 120i is performed by using a radio air interface protocol. Certainly, the communication between 110a and 120i may alternatively be performed by using an interface protocol between base stations. In this case, for 110a, 120i is also a base station. Therefore, both the base station and the terminal may be collectively referred to as communication apparatuses, 110a and 110b in FIG. 1 may be referred to as communication apparatuses having a function of the base station, and 120a to 120j in FIG. 1 may be referred to as communication apparatuses having a function of the terminal.

Communication between the base station and the terminal, between the base stations, and between the terminals may be performed by using a licensed spectrum, may be performed by using an unlicensed spectrum, or may be performed by using both the licensed spectrum and the unlicensed spectrum. Communication may be performed by using a spectrum below 6 gigahertz (gigahertz, GHz), may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, the function of the base station may alternatively be performed by a module (for example, a chip) in the base station, or may be performed by a control subsystem including the function of the base station. The control subsystem including the function of the base station herein may be a control center in the foregoing application scenarios such as a smart grid, industrial control, smart transportation, and a smart city. The function of the terminal may alternatively be performed by a module (for example, a chip or a modem) in the terminal, or may be performed by an apparatus including the function of the terminal.

In this application, the base station sends a downlink signal or downlink information to the terminal. The downlink information is carried on a downlink channel. The terminal sends an uplink signal or uplink information to the base station. The uplink information is carried on an uplink channel. To communicate with the base station, the terminal needs to establish a wireless connection to a cell controlled by the base station. A cell that establishes a wireless connection to the terminal is referred to as a serving cell of the terminal. When the terminal communicates with the serving cell, the terminal is further interfered by a signal from a neighboring cell.

In embodiments of this application, a time domain symbol may be an orthogonal frequency division multiplexing (orthogonal frequency division multiplexing, OFDM) symbol, or may be a discrete Fourier transform-spread-OFDM (Discrete Fourier Transform-spread-OFDM, DFT-s-OFDM) symbol. Unless otherwise specified, symbols in embodiments of this application are time domain symbols.

It may be understood that, in embodiments of this application, a physical downlink shared channel (physical downlink shared channel, PDSCH), a physical downlink control channel (physical downlink control channel, PDCCH), and a physical uplink shared channel (physical uplink shared channel, PUSCH) are merely examples of a downlink data channel, a downlink control channel, and an uplink data channel respectively. In different systems and different scenarios, a data channel and a control channel may have different names. This is not limited in embodiments of this application.

To better understand embodiments of this application, the following briefly describes technologies and terms used in this specification.

1. Cell and carrier

The cell may be understood as a coverage area of a radio signal identified by using a network device identifier or a cell global identifier. The cell is a unit for managing a wireless communication resource, a frequency domain resource of the cell includes at least one carrier, and the carrier is a continuous frequency domain resource for carrying information. The information in this application may include one or more of control information, service data, and a reference signal. The carrier is represented by a carrier frequency and a carrier bandwidth. At least one carrier included in one cell includes one downlink carrier and one or more uplink carriers. The downlink carrier is used to carry a radio signal sent by the network device to a terminal. The uplink carrier is used to carry a radio signal sent by the terminal to a network. Based on different duplex manners, for example, when the cell uses a frequency division duplex (frequency division duplex, FDD) manner, a downlink carrier and an uplink carrier of one cell may be different. When the cell uses a time division duplex (time division duplex, TDD) manner, a downlink carrier and an uplink carrier of one cell may be the same.

A carrier of one cell used as a frequency domain resource and a time resource form a time-frequency resource of the cell. Alternatively, this may be understood as that the carrier forms the time-frequency resource with time. Information transmitted by the network device and the terminal in the cell is carried on the time-frequency resource of the cell. Specifically, a downlink carrier and a time resource form a downlink time-frequency resource of the cell, and an uplink carrier and a time resource form an uplink time-frequency resource of the cell.

2. Carrier aggregation (carrier aggregation, CA)

In a non-carrier aggregation scenario, the terminal may establish a communication connection to one cell, and the cell provides a network service for the terminal.

In a carrier aggregation scenario, the terminal may establish communication connections to a plurality of cells. The plurality of cells serve as serving cells of the terminal to provide a communication service for the terminal. Carrier frequencies of the plurality of cells are different, and carrier frequency domain resources do not overlap. This can increase a communication bandwidth between the network device and the terminal, and can increase a data transmission rate.

3. PDCCH monitoring occasion (monitoring occasion)

A PDCCH is used to carry DCI, and the PDCCH monitoring occasion is a time unit for monitoring the PDCCH. The network device may configure a PDCCH monitoring occasion for the terminal, and the network device may send DCI to the terminal on a PDCCH on one PDCCH monitoring occasion. The terminal detects the PDCCH on the PDCCH monitoring occasion to obtain the DCI.

The network device may configure a PDCCH monitoring periodicity, a PDCCH monitoring offset, and a PDCCH monitoring mode for the terminal, so that the terminal can determine a location of the PDCCH monitoring occasion. If the PDCCH monitoring periodicity is two slots, and the monitoring offset is 1, it may be determined that the monitoring occasion is located in a $2^{nd}$ slot in two slots in each PDCCH periodicity. As shown in FIG. 2, the terminal may determine that a slot 1, a slot 3, a slot 5, a slot 7, and a slot 9 include PDCCH monitoring occasions. In the PDCCH monitoring mode, a start symbol of PDCCH search space in a slot in which monitoring needs to be performed is configured by using a 14-bit bitmap (bitmap). 14 bits are in one-to-one correspondence with 14 symbols in one slot, a most significant bit (a leftmost bit) corresponds to a $1^{st}$ symbol in one slot, and a least significant bit (a rightmost bit) corresponds to a last symbol in the slot. One of the 14 bits indicates whether a corresponding symbol is the start symbol of the PDCCH search space. For example, the 14 bits are "1000000000000", indicating that a $1^{st}$ symbol in a slot in which the PDCCH needs to be monitored is a $1^{st}$ symbol of the PDCCH search space, and the terminal may search for the PDCCH in search space starting from a $1^{st}$ symbol in each slot in which the PDCCH needs to be monitored. For another example, the 14 bits are "0100000000000", indicating that the terminal may search for the PDCCH in search space starting from a $2^{nd}$ symbol in each slot in which the PDCCH needs to be monitored. A quantity of consecutive symbols of the search space is configured in a CORESET time domain length configuration by using a duration (duration) field. For example, if the field may indicate 2, it indicates that the search space lasts for two OFDM symbols.

4. Hybrid automatic repeat request (hybrid automatic repeat request, HARQ)-acknowledge (acknowledge, ACK) codebook

In a mobile communication system, a network device sends, to a terminal, DCI for scheduling a PDSCH, and the terminal receives data on the PDSCH based on the DCI from the network device. The DCI includes a PDSCH-to-HARQ_feedback timing indicator (PDSCH-to-HARQ_feedback timing indicator), indicating a time interval K1 between a time unit in which the terminal sends HARQ feedback information and the PDSCH scheduled by using the DCI. In this way, the terminal may determine, based on a time unit in which the PDSCH is located and the time interval K1, the time unit for sending the HARQ feedback information of the PDSCH. The HARQ feedback information is one type of uplink control information (uplink control information, UCI). Generally, the terminal sends the HARQ feedback information on a physical uplink control channel (physical uplink control channel, PUCCH) in the time unit. When a specific condition is met, the terminal may alternatively send the HARQ feedback information to the network device on a physical uplink shared channel (physical uplink shared channel, PUSCH) in the time unit.

K1 indicated by different DCI may be different, so that HARQ feedback information of the PDSCH received by the terminal in different time units may be sent in a same time unit. HARQ feedback information of different PDSCHs sent in a same time unit forms a HARQ-ACK codebook. As shown in FIG. 3, for example, the time unit is a slot. The network device indicates, in DCI for scheduling a PDSCH 1 in a downlink slot n, that K1 is eight slots. The terminal may determine to send HARQ feedback information of the PDSCH 1 in an uplink slot n+8 based on the slot n in which the PDSCH 1 is located and K1=8. The network device indicates, in DCI for scheduling a PDSCH 2 in a downlink slot n+2, that K1 is six slots, and indicates, in DCI for scheduling a PDSCH 3 in a downlink slot n+5, that K1 is three slots. The terminal may determine that HARQ feedback information of the PDSCH 2 and the PDSCH 3 is also sent in the uplink slot n+8. A HARQ-ACK codebook sent by the terminal in the uplink slot n+8 includes the HARQ feedback information of the PDSCH 1, the PDSCH 2, and the PDSCH 3. It should be noted that, in embodiments of this application, an example in which the time unit is a slot is used for description. However, this application is not limited thereto. In a specific implementation, the time unit may be another time unit such as a frame, a subframe, a mini-slot (mini-slot), or a sub-slot (sub-slot).

A current HARQ mechanism is designed for scheduling a data channel of one cell by using one piece of DCI. When one piece of DCI can be used to schedule data channels in a plurality of cells, the HARQ mechanism further needs to be adaptively improved, so that a data receive end and a data transmit end have a consistent understanding of whether data is correctly received. In embodiments of this application, without a logical contradiction, a cell and a carrier may be used interchangeably. For example, a data channel of the cell and a data channel on the carrier may be used interchangeably, and a cell index and a carrier identifier may be used interchangeably.

Embodiments of this application provide a HARQ-ACK codebook feedback method. DCI that is sent by a network device to a terminal and that is for scheduling a plurality of data channels on a plurality of carriers includes a C-DAI. The terminal determines, based on the C-DAI, an arrangement order of HARQ feedback information of the plurality of data channels scheduled by using the DCI in a HARQ-ACK codebook, and feeds back an obtained HARQ-ACK codebook to the network device. The terminal feeds back the HARQ-ACK codebook to the network device based on the C-DAI indicated by the network device, so that the terminal and the network device can have a consistent understanding of a HARQ-ACK codebook including HARQ feedback information of a plurality of data channels scheduled by using one piece of DCI. This improves reliability of HARQ-ACK codebook feedback and reliability of data transmission.

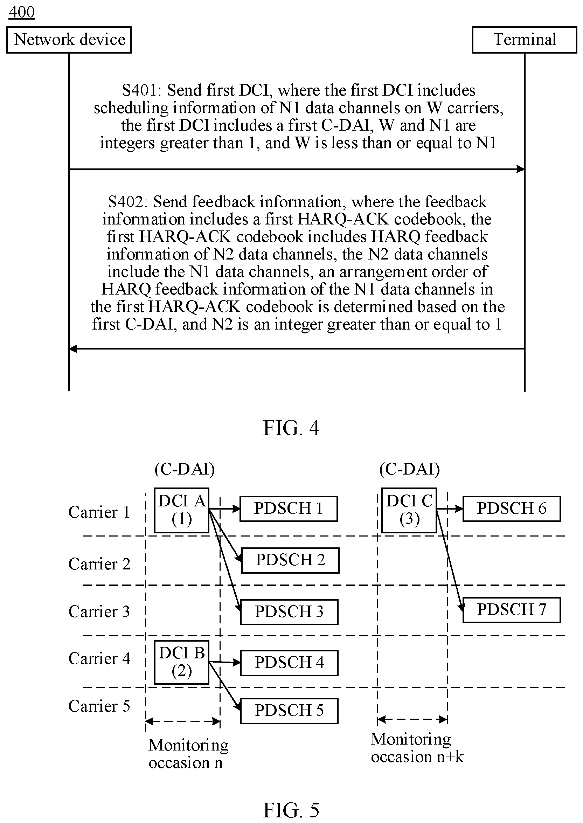

FIG. 4 is a schematic flowchart of a HARQ-ACK codebook feedback method 400 according to an embodiment of this application. The method 400 uses a network device and a terminal as an example for description. The network device or a module used in the network device may perform a step performed by the network device in the method 400, to implement a corresponding function. The terminal or a module used in the terminal may perform a step performed by the terminal in the method 400, to implement a corresponding function. The method 400 includes but is not limited to the following steps.

S401: The network device sends first DCI to the terminal. The first DCI includes scheduling information of N1 data channels on W carriers and a C-DAI, W and N1 are integers greater than 1, and W is less than or equal to N1.

Correspondingly, the terminal receives the first DCI from the network device. A monitoring occasion on which the terminal receives the first DCI may be denoted as a first monitoring occasion. The first DCI includes a first C-DAI, and the first C-DAI is used to determine an arrangement order of HARQ feedback information of the N1 data channels in a first HARQ-ACK codebook sent in S402. For details, refer to descriptions in S402.

The first DCI is used to schedule the N1 data channels on the W carriers, and the first DCI is used to schedule at least one data channel on each of the W carriers. For ease of description, in this application, DCI for scheduling a plurality of data channels on a plurality of carriers is referred to as multi-carrier scheduling DCI. The terminal receives the N1 data channels on the W carriers based on the first DCI. The terminal generates the HARQ feedback information of the N1 data channels depending on whether the N1 data channels are correctly received, and sends the HARQ feedback information to the network device.

S402: The terminal sends feedback information to the network device, where the feedback information includes the first HARQ-ACK codebook, the first HARQ-ACK codebook includes HARQ feedback information of N2 data channels, the N2 data channels include the N1 data channels, and the arrangement order of the HARQ feedback information of the N1 data channels in the first HARQ-ACK codebook is determined based on the first C-DAI. N2 is an integer greater than or equal to N1.

That the arrangement order of the HARQ feedback information of the N1 data channels in the first HARQ-ACK codebook is determined based on the first C-DAI means that a location of the HARQ feedback information of the N1 data channels as a whole in the first HARQ-ACK codebook is determined based on the first C-DAI. In other words, in the first HARQ-ACK codebook, a sequence of the HARQ feedback information of the N1 data channels as a whole and HARQ feedback information of another data channel in the first HARQ-ACK codebook is determined based on the first C-DAI.

The first DCI includes the PDSCH-to-HARQ feedback timing indicator (referred to as a "timing indicator" for short below). The terminal may determine, based on the timing indicator, a first slot for sending the HARQ feedback information of the N1 data channels. The terminal sends the first HARQ-ACK codebook in the first slot, where the first HARQ-ACK codebook includes the HARQ feedback information of the N1 data channels. If the terminal determines, based on a timing indicator in other received DCI for scheduling the data channel, that feedback information of another data channel further needs to be sent in the first slot, that is, N2 is greater than N1, the feedback information of the N2 data channels needs to be sent in total in the first slot. The terminal determines an arrangement order of the feedback information of the N2 data channels based on a C-DAI indicated by DCI for scheduling the N2 data channels, generates the first HARQ-ACK codebook, and sends the first HARQ-ACK codebook in the first slot.

Manners in which the first C-DAI indicates a cumulative count value may include but is not limited to an implementation 1 to an implementation 3. The following separately describes the three implementations.

In the implementation 1, the first C-DAI indicates a cumulative count value of the first DCI in the DCI for scheduling the N2 data channels. For the DCI for scheduling the N2 data channels, DCI on a same monitoring occasion is sequentially and cumulatively counted first in ascending order of serving cell indexes of cells on which the DCI is transmitted, and then in a time sequence of monitoring occasions to which the DCI belongs.

In other words, the first C-DAI indicates a cumulative count value obtained by performing counting on a pair of (serving cell, PDCCH monitoring occasion) first in ascending order of the serving cell indexes and then in the time sequence of the monitoring occasions until a current serving cell (that is, a serving cell in which the first DCI is located) and a current monitoring occasion (that is, the first monitoring occasion on which the first DCI is located). As described above, in this application, a cell and a carrier may be used interchangeably, and a cell index and a carrier identifier may be used interchangeably. The first C-DAI may also be understood as indicating a cumulative count value obtained by performing counting on a pair of (carrier, PDCCH monitoring occasion) first in ascending order of carrier identifiers and then in the time sequence of the monitoring occasions until a current carrier (that is, a carrier on which the first DCI is located) and the current monitoring occasion (that is, the first monitoring occasion on which the first DCI is located). The following uses the carrier and the carrier identifier as an example to describe this embodiment of this application.

It should be noted that the DCI is in one-to-one correspondence with a PDCCH carrying the DCI. Therefore, in this implementation, this case may also be referred to as a case in which the first C-DAI indicates a cumulative count value of a PDCCH carrying the first DCI in PDCCHs carrying the DCI for scheduling the N2 data channels. The following uses an example in which the first C-DAI indicates the cumulative count value of the first DCI in the DCI for scheduling the N2 data channels for description. The cumulative count value of the PDCCH indicated by the first C-DAI may be implemented with reference to the following example. For brevity, details are not described herein.

As shown in FIG. 5, the network device communicates with the terminal in a carrier aggregation manner, and the network device may schedule PDSCHs on a plurality of carriers by using one piece of DCI. As shown in FIG. 5, the network device sends DCI A on a carrier 1 and sends DCI B on a carrier 4 on a monitoring occasion n. The DCI A is used to schedule a PDSCH 1, a PDSCH 2, and a PDSCH 3 that are respectively located on the carrier 1, a carrier 2, and a carrier 3. The DCI B is used to schedule a PDSCH 4 and a PDSCH 5 that are respectively located on a carrier 4 and a carrier 5. The network device may indicate, by using a timing indicator in the DCI A, the terminal to send, in the first slot, HARQ feedback information of three PDSCHs scheduled by using the DCI A, and the network device also indicates, by using a timing indicator in the DCI B, to send, in the first slot, HARQ feedback information of two PDSCHs scheduled by using the DCI B. It is assumed that DCI on the monitoring occasion n is DCI that appears earliest and that indicates to send HARQ feedback information of a PDSCH in the first slot, and a carrier identifier of a carrier on which the DCI A is located is 1 and is less than a carrier identifier 4 of a carrier on which the DCI B is located. Therefore, a C-DAI in the DCI A indicates that a cumulative count value of the DCI is 1, and a C-DAI in the DCI B indicates that a cumulative count value of the DCI is 2. After the monitoring occasion n, a next piece of DCI that is sent by the network device and that indicates to send HARQ feedback information of a PDSCH in the first slot is DCI C on the carrier 1 on a monitoring occasion n+k, where k is a positive integer. The DCI C is used to schedule a PDSCH 6 and a PDSCH 7 that are respectively located on the carrier 1 and the carrier 3. In this case, a C-DAI in the DCI C indicates that a cumulative count value of the DCI is 3.

It should be noted that the embodiment shown in FIG. 5 shows an example of the carrier carrying the DCI and the carrier carrying the PDSCH. Carrier aggregation between the terminal and the network device may include but is not limited to the carrier 1 to the carrier 5 shown in FIG. 5, for example, may further include carriers that are not shown in FIG. 5, such as a carrier 0 and/or a carrier 6.

If a plurality of pieces of DCI in the DCI for scheduling the N2 data channels are on a same monitoring occasion and on a same carrier, the plurality of pieces of DCI are sequentially and cumulatively counted in ascending order or descending order of carrier identifiers of carriers on which reference data channels scheduled by each of the plurality of pieces of DCI are transmitted.

In an example, the reference data channel scheduled by using the DCI may be a data channel that is in data channels scheduled by using the DCI and that is located on a carrier with a smallest carrier identifier, or may be a data channel that is in data channels scheduled by using the DCI and that is located on a carrier with a largest carrier identifier.

Alternatively, if a plurality of pieces of DCI in the DCI for scheduling the N2 data channels are on a same monitoring occasion and on a same carrier, the plurality of pieces of DCI are sequentially and cumulatively counted in ascending order or descending order of carrier identifiers of reference carriers in carriers on which scheduled data channels are located. The reference carrier scheduled by using the DCI may be a data channel with a smallest carrier identifier in a plurality of carriers scheduled by using the DCI, or may be a data channel with a largest carrier identifier in a plurality of carriers scheduled by using the DCI.

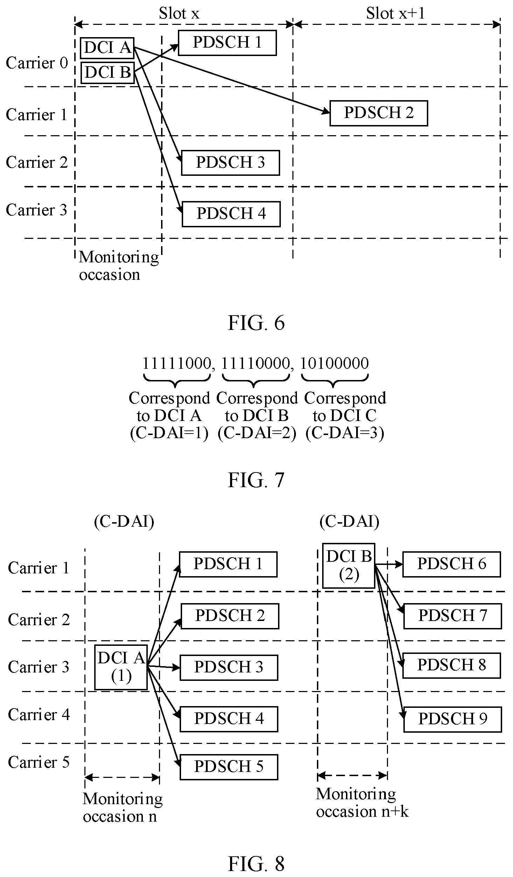

As shown in FIG. 6, the network device sends DCI A and DCI B on a carrier 0 on a same monitoring occasion, and both a timing indicator in the DCI A and a timing indicator in the DCI B indicate to send HARQ feedback information of PDSCHs in the first slot. The DCI A is used to schedule a PDSCH 2 on a carrier 1 and a PDSCH 3 on a carrier 2. The DCI B is used to schedule a PDSCH 1 on the carrier 0 and a PDSCH 4 on a carrier 3. The network device may determine that a PDSCH that is in data channels scheduled by using the DCI A and that is located on a carrier with a smaller carrier identifier is the PDSCH 2 on the carrier 1, and the PDSCH 2 is a reference data channel scheduled by using the DCI A. Similarly, the network device may determine that a reference data channel scheduled by using the DCI B is the PDSCH 1 on the carrier 0. A carrier identifier 0 of the carrier on which the PDSCH 1 is located is less than a carrier identifier 1 of the carrier on which the PDSCH 2 is located. In this case, cumulative counting is performed on the DCI B before the DCI A. For example, C-DAI in the DCI B indicates that a cumulative count value of the DCI is y, and C-DAI in the DCI A indicates that a cumulative count value of the DCI is y+1. In this solution, the terminal and the network device can have a consistent understanding of the cumulative count value of the DCI.

In another example, the reference data channel scheduled by using the DCI is a data channel that is in data channels scheduled by using the DCI and that is used to determine a time unit for sending the HARQ feedback information.

For example, the terminal determines, based on a slot in which a PDSCH that is scheduled by using the DCI and that has a latest end time point is located and the timing indicator indicated by the DCI, a slot in which the HARQ feedback information of the PDSCH is located. In the example shown in FIG. 6, the PDSCH 3 scheduled by using the DCI A is located in a slot x, the PDSCH 2 is located in a slot x+1, and the PDSCH 2 is a PDSCH with a later end time point in the PDSCHs scheduled by using the DCI A. The terminal determines, based on the slot x in which the PDSCH 2 is located and the timing indicator in the DCI A, to send, in the first slot, HARQ feedback information of the PDSCH scheduled by using the DCI A. In this case, the PDSCH 2 is the reference data channel scheduled by using the DCI A. If the two PDSCHs scheduled by using the DCI B are both in the slot x, the terminal determines, based on the slot x and the timing indicator in the DCI B, to send, in the first slot, HARQ feedback information of the PDSCH scheduled by using the DCI B. The network device may determine, based on carrier identifiers of the carriers on which the PDSCH 1 and the PDSCH 4 that are in the slot x and that are scheduled by using the DCI B are located, that the reference data channel scheduled by using the DCI B is the PDSCH 1 on the carrier 0. After determining the reference data channels scheduled by using the DCI A and the DCI B, the network device may further perform cumulative counting on the DCI in ascending order of the carrier identifiers of the carriers on which the reference data channels are located. The carrier identifier 0 of the carrier on which the PDSCH 1 scheduled by using the DCI B is located is less than the carrier identifier 1 of the carrier on which the reference data channel PDSCH 2 of the DCI A is located. In this case, the C-DAI in the DCI B indicates that the cumulative count value of the DCI is y, and the C-DAI in the DCI A indicates that the cumulative count value of the DCI is y+1. In this solution, the terminal and the network device have a consistent understanding of the cumulative count value of the DCI.

The terminal arranges, in ascending order of cumulative count values indicated by the C-DAI in the DCI, the HARQ feedback information of the PDSCH sent in the first slot, to obtain the first HARQ-ACK codebook.

In the example shown in FIG. 5, if only the three pieces of DCI shown in FIG. 5 are included to indicate to send the HARQ feedback information of the PDSCHs in the first slot, the first HARQ-ACK codebook sent by the terminal in the first slot includes HARQ feedback information of the seven PDSCHs scheduled by using the three pieces of DCI, that is, N2=7. An arrangement order of the seven PDSCHs in the first HARQ-ACK codebook is determined based on the C-DAIs indicated by the DCI for scheduling the PDSCHs. In the first HARQ-ACK codebook, the HARQ feedback information of the three PDSCHs scheduled by using the DCI A is before the HARQ feedback information of the two PDSCHs scheduled by using the DCI B, and HARQ feedback information of two PDSCHs scheduled by using the DCI C is after the HARQ feedback information of the two PDSCHs scheduled by using the DCI B.

Optionally, HARQ feedback information of a plurality of PDSCHs scheduled by using same DCI may be arranged in the first HARQ-ACK codebook in ascending order of carrier identifiers of carriers on which the PDSCHs are located.

In the example shown in FIG. 5, in ascending order of the carrier identifiers of the carriers on which the PDSCHs are located, a sequence of the HARQ feedback information of the three PDSCHs scheduled by using the DCI A in the first HARQ-ACK codebook is the HARQ feedback information of the PDSCH 1 on the carrier 1, the HARQ feedback information of the PDSCH 2 on the carrier 2, and the HARQ feedback information of the PDSCH 3 on the carrier 3. A sequence of the HARQ feedback information of the two PDSCHs scheduled by using the DCI B in the first HARQ-ACK codebook is the HARQ feedback information of the PDSCH 4 on the carrier 4 and the HARQ feedback information of the PDSCH 5 on the carrier 5.

The network device and the terminal have a same understanding of the arrangement order of the HARQ feedback information of the data channels in the first HARQ-ACK codebook, so that after receiving the first HARQ-ACK codebook, the network device can determine locations of the HARQ feedback information of the N2 data channels, and determine whether the terminal correctly receives a corresponding data channel based on the HARQ feedback information.

The following lists two specific implementation examples of the first HARQ-ACK codebook provided in this embodiment of this application.

In an example, the first HARQ-ACK codebook includes K HARQ feedback information groups, K is a quantity of DCI for scheduling the N2 data channels, and one HARQ feedback information group includes L1 pieces of HARQ feedback information. One HARQ feedback information group includes HARQ feedback information of all data channels scheduled by using one piece of DCI, L1 is greater than or equal to N1, L1 is a maximum quantity of data blocks scheduled by using one piece of DCI, and the data channel is used to carry at least one data block.

In other words, if timing indicators in the K pieces of DCI indicate to send the HARQ feedback information of the scheduled data channels in the first slot, the first HARQ-ACK codebook sent by the terminal in the first slot includes the K HARQ feedback information groups, and each HARQ feedback information group includes a maximum of L1 pieces of feedback information of data blocks that can be scheduled by using one piece of DCI.

If a maximum quantity of PDSCHs that can be scheduled by using one piece of DCI is $N_{max}$, and a maximum quantity of data blocks that can be carried by one PDSCH is D, the maximum quantity of data blocks that can be scheduled by using one piece of DCI is $N_{max \times D}$.

One piece of DCI may be used to schedule only one PDSCH on one carrier. In this case, $N_{max}$ PDSCHs scheduled by using one piece of DCI are respectively located on $N_{max}$ carriers. In the embodiment shown in FIG. 4, if the first DCI is used to schedule the N1 data channels on the W carriers, W=N1 in this manner.

By way of example but not limitation, the data block may be a transport block (transport block, TB), a code block (code block, CB), or a CB group (CB group, CBG).

For example, if the data block is a TB, the maximum quantity $N_{max}$ of PDSCHs that can be scheduled by using one piece of DCI is 4, and a maximum quantity of TBs that can be carried by one PDSCH is 2, the maximum quantity L1 of TBs that can be scheduled by using one piece of DCI is 8. In the example shown in FIG. 5, the first HARQ-ACK codebook includes the HARQ feedback information of the seven PDSCHs scheduled by using the three pieces of DCI, that is, K=3 and N2=7. The first HARQ-ACK codebook includes three HARQ feedback information groups, and each HARQ feedback information group includes eight pieces of HARQ feedback information. In this case, the first HARQ-ACK codebook includes 24 pieces of HARQ feedback information, and based on the cumulative count values indicated by the C-DAIs in the DCI, the first eight pieces of HARQ feedback information in the first HARQ-ACK codebook are the feedback information corresponding to the DCI A. The DCI A is used to schedule only three PDSCHs. In this case, the first six pieces of HARQ feedback information in the eight pieces of HARQ feedback information are sequentially two pieces of HARQ feedback information of the PDSCH 1, two pieces of HARQ feedback information of the PDSCH 2, and two pieces of HARQ feedback information of the PDSCH 3. Similarly, eight middle pieces of HARQ feedback information are the feedback information corresponding to the DCI B, and the first four pieces of HARQ feedback information are sequentially two pieces of HARQ feedback information of the PDSCH 4 and two pieces of HARQ feedback information of the PDSCH 5. The last eight pieces of HARQ feedback information are the HARQ feedback information corresponding to the DCI C, and the first four pieces of HARQ feedback information are sequentially two pieces of HARQ feedback information of the PDSCH 6 and two pieces of HARQ feedback information of the PDSCH 7.

One piece of HARQ feedback information may be one bit, and the bit indicates whether a TB corresponding to the bit is successfully received by the terminal. For example, if the bit indicates "1", it indicates that the TB corresponding to the bit is successfully received; or if the bit indicates "0", it indicates that the TB corresponding to the bit fails to be received. In the example in FIG. 5, if one piece of DCI is not used to schedule all the eight TBs, eight bits in the HARQ feedback information group corresponding to the DCI include a bit that does not correspond to the TB, and the bit that does not correspond to the TB may be set to a preset value. For example, the preset value may be "0".

For example, both the PDSCH 1 and the PDSCH 2 that are scheduled by using the DCI A carry two TBs, and the PDSCH 3 carries one TB. That is, the DCI A is used to schedule five TBs in total. If the terminal successfully receives the five TBs, the first eight bits in the first HARQ-ACK codebook are "11111000". A $1^{st}$ bit and a $2^{nd}$ bit respectively indicate that the two TBs on the PDSCH 1 are successfully received, and a $3^{rd}$ bit and a $4^{th}$ bit respectively indicate that the two TBs on the PDSCH 2 are successfully received. The PDSCH 3 carries one TB. In this case, a $5^{th}$ bit indicates that the TB on the PDSCH 3 is successfully received. Other three bits do not correspond to the TB, and indicate the preset value "0". Correspondingly, after receiving the first HARQ-ACK codebook, the network device may determine, based on the eight bits, that the terminal successfully receives the five TBs scheduled by using the DCI A. If the terminal fails to receive a $2^{nd}$ TB on the PDSCH 2, and a bit corresponding to the $2^{nd}$ TB on the PDSCH 2 indicates "0", the eight bits are "11101000". The network device may determine, based on the eight bits in the first HARQ-ACK codebook fed back by the terminal, that the terminal fails to receive the $2^{nd}$ TB on the PDSCH 2 and successfully receives another TB in the five TBs scheduled by using the DCI A.

If the two PDSCHs scheduled by using the DCI B each carry two TBs, and the DCI B is used to schedule four TBs in total, the first four bits in eight bits in a HARQ feedback information group corresponding to the DCI B sequentially correspond to the four TBs, and the other four bits indicate the preset value "0".

If the PDSCH 6 and the PDSCH 7 that are scheduled by using the DCI C each carry one TB, a $1^{st}$ bit in eight bits in a HARQ feedback information group corresponding to the DCI C indicates whether the TB carried on the PDSCH 6 is successfully received by the terminal, and a $2^{nd}$ bit does not correspond to the TB, and indicates "0". A $3^{rd}$ bit indicates whether the TB carried on the PDSCH 7 is successfully received by the terminal. For example, if the terminal successfully receives the two TBs, the eight bits are "10100000". If one or both of the two TBs fail to be received by the terminal, a corresponding bit indicates "0". For example, if all TBs scheduled by using the three pieces of DCI shown in FIG. 5 are successfully received, 24 bits corresponding to the three pieces of DCI in the first HARQ-ACK codebook are shown in FIG. 7. If there is a TB that fails to be received, a corresponding bit indicates "0".

The foregoing uses an example in which the data block is a TB for description. The data block may alternatively be a CB or a CBG. For a specific implementation, refer to the foregoing example of the TB. For brevity, details are not described herein again.

According to this solution, a quantity of feedback information in a HARQ feedback information group corresponding to each piece of DCI included in the first HARQ-ACK codebook is a fixed value, namely, L1, so that even if the terminal fails to receive one or more pieces of DCI, the terminal can obtain the first HARQ-ACK codebook based on the C-DAI. For example, in the example shown in FIG. 5, the terminal successfully receives the DCI A and the DCI C, but does not receive the DCI B. The terminal may determine, based on a C-DAI indicator 1 in the DCI A and a C-DAI indicator 3 in the DCI C, that DCI whose cumulative count value is 2 is not received. The eight bits corresponding to the DCI A in the first HARQ-ACK codebook sent by the terminal are followed by eight bits that indicate all "0" and that correspond to the DCI whose cumulative count value is 2, and are followed by the eight bits corresponding to the DCI C. In this way, the network device may still determine, based on the C-DAIs of the three pieces of DCI including the DCI B that are sent by the network device, HARQ feedback information corresponding to all the TBs in the first HARQ-ACK codebook. This improves transmission reliability of the HARQ-ACK codebook. Through reliable HARQ-ACK codebook feedback, the network device can retransmit the data block in time when the terminal fails to receive the data block, to improve transmission efficiency and reliability of the data block.

In another example, the first HARQ-ACK codebook includes K HARQ feedback information groups, and one HARQ feedback information group includes L2 pieces of HARQ feedback information. One HARQ feedback information group includes HARQ feedback information of a data channel group to which all data channels scheduled by using one piece of DCI belong, L2 is less than or equal to N1, and L2 is a maximum quantity of data channel groups scheduled by using one piece of DCI.

The terminal groups, based on L2, the data channels scheduled by using one piece of DCI. For example, the terminal groups the N1 data channels scheduled by using the first DCI into L2 data channel groups, and the L2 pieces of HARQ feedback information are in one-to-one correspondence with the L2 data channel groups. One of the L2 pieces of HARQ feedback information indicates that a corresponding data channel group is successfully received or at least one data channel in a corresponding data channel group fails to be received.

By way of example but not limitation, L2 may be indicated by the network device to the terminal by using signaling or predefined in a protocol. The signaling may be a radio resource control (radio resource control, RRC) message and/or a medium access control (medium access control, MAC) control element (control element, CE).

A grouping manner in which the N1 data channels are grouped into the L2 data channel groups may be determined based on a specific implementation requirement. In an optional implementation, a data channel group in the L2 data channel groups may include [N1/L2] data channels, and a last data channel group includes N1 - (L2 - 1) $\times$ [N1/L2] data channels.

For example, the network device may configure L2 as 2 for the terminal by using the RRC message. In the example shown in FIG. 5, the DCI A is used to schedule three PDSCHs, and the three PDSCHs are grouped into two

PDSCH groups. A 1st PDSCH group includes $\lfloor 3/2 \rfloor = 1$ PDSCH, and a 2nd PDSCH group includes two PDSCHs. For example, if the terminal performs grouping in ascending order of the carrier identifiers of the carriers on which the PDSCHs are located, the 1st PDSCH group includes the PDSCH 1, and the 2nd PDSCH group includes the PDSCH 2 and the PDSCH 3. The two PDSCHs scheduled by using each of the DCI B and the DCI C are one PDSCH group. The first HARQ-ACK codebook includes 2-bit HARQ feedback information of two PDSCH groups scheduled by using each piece of DCI. In other words, the first HARQ-ACK codebook includes six bits. Based on the C-DAIs indicated by the DCI, it may be determined that the first two bits are feedback information of the two PDSCH groups scheduled by using the DCI A, a 1st bit indicates whether the PDSCH group including only the PDSCH 1 is successfully received by the terminal device, and a 2nd bit indicates the PDSCH group including the PDSCH 2 and the PDSCH 3. If at least one of the PDSCH 2 and the PDSCH 3 fails to be received by the terminal, the bit indicates "0"; or if both the PDSCH 2 and the PDSCH 3 are successfully received by the terminal, the bit indicates "1". A 3rd bit and a 4th bit are respectively the HARQ feedback information of the two PDSCHs (that is, each PDSCH is a PDSCH group) scheduled by using the DCI B, and a 5th bit and a 6th bit are respectively the HARQ feedback information of the two PDSCHs (that is, each PDSCH is a PDSCH group) scheduled by using the DCI C. In this solution, the PDSCHs are grouped and one piece of HARQ feedback information is fed back for each group, so that bit overheads of the HARQ-ACK codebook can be reduced, and resource utilization can be improved.

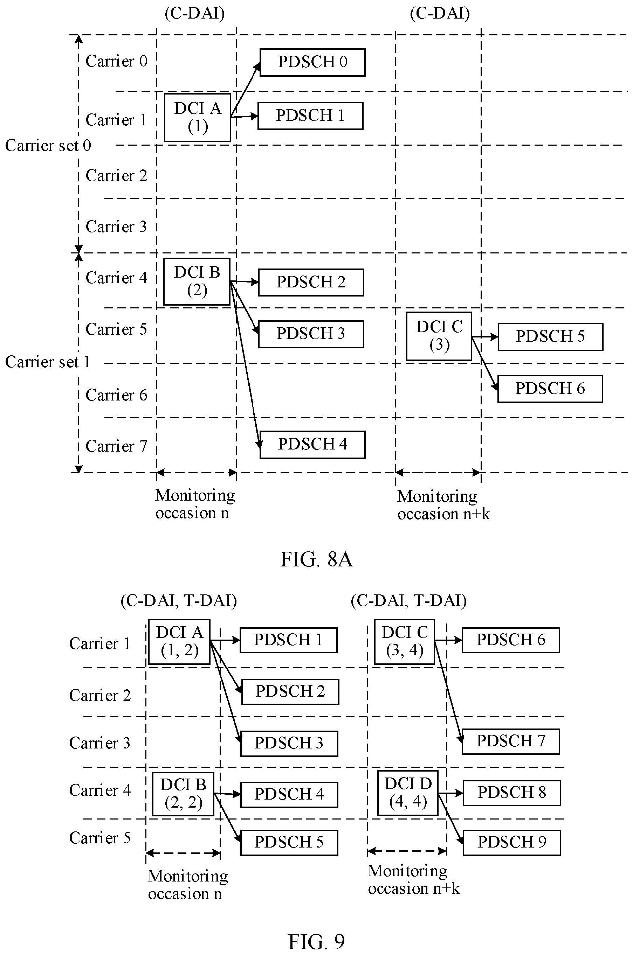

As shown in FIG. 8, the network device configures L2 as 2 for the terminal by using the RRC message. The network device sends the DCI A to the terminal on the monitoring occasion n, and the DCI A is used to schedule a total of five PDSCHs including a PDSCH 1 to a PDSCH 5 shown in FIG. 8. The timing indicator in the DCI A indicates to send HARQ feedback information of the PDSCH in the first slot, and the C-DAI in the DCI A indicates 1. In addition, the network device sends the DCI B on the monitoring occasion n+k, and the DCI B is used to schedule a total of four PDSCHs including a PDSCH 6 to a PDSCH 9 shown in FIG. 8. The timing indicator in the DCI B also indicates to send HARQ feedback information of the PDSCH in the first slot, and the C-DAI in the DCI B indicates 2. The terminal may determine that the five PDSCHs scheduled by using the DCI A are grouped into three PDSCH groups. A 1st PDSCH group includes $\lfloor 5/2 \rfloor = 2$ PDSCHs, and a 2nd PDSCH group includes three PDSCHs. In other words, the PDSCH 1 and the PDSCH 2 are a PDSCH group 1, and the PDSCH 3 to the PDSCH 5 are a PDSCH group 2. The first two bits in the first HARQ-ACK codebook sent by the terminal in the first slot respectively correspond to the PDSCH group 1 and the PDSCH group 2 that are scheduled by using the DCI A, and indicate whether all PDSCHs in a corresponding PDSCH group are successfully received. Similarly, the terminal may determine groups of the four PDSCHs scheduled by using the DCI B, and the terminal may determine, based on N1 and L2, that each group includes 2 PDSCHs. A 3rd bit in the first HARQ-ACK codebook indicates whether a PDSCH group 3 including the PDSCH 6 and the PDSCH 7 is all successfully received, and a 4th bit indicates whether a PDSCH group 4 including the PDSCH 8 and the PDSCH 9 is all successfully received. The nine PDSCHs scheduled by using the DCI A and the DCI B need only four HARQ feedback bits, to reduce the feedback overheads of the first HARQ-ACK codebook and improve the resource utilization.

In an implementation, the network device may configure at least one carrier set for the terminal by using first configuration information. One carrier set includes a plurality of carriers, and one piece of multi-carrier scheduling DCI may be used to schedule data channels on at least two carriers in one carrier set.

One piece of multi-carrier scheduling DCI sent by the network device can only be used to schedule data channels on at least two carriers in one carrier set. In other words, the terminal does not expect one piece of multi-carrier scheduling DCI to be used to schedule data channels on carriers in a plurality of carrier sets. In other words, the terminal does not expect one piece of multi-carrier scheduling DCI to schedule data channels on carriers in different carrier sets. The carrier set may be referred to as a co-scheduled carrier set. The W carriers on which the N1 data channels scheduled by using the first DCI are located are carriers in one carrier set.

For example, the network device configures a total of eight carriers including a carrier 0 to a carrier 7 for the terminal by using the RRC message, and the terminal may communicate with the network device by using the eight carriers in the carrier aggregation communication manner. In addition, the network device configures a total of two carrier sets including a carrier set 0 and a carrier set 1 for the terminal by using the first configuration information. The carrier set 0 includes the carrier 0 to the carrier 3, and the carrier set 1 includes the carrier 4 to the carrier 7. One piece of multi-carrier scheduling DCI sent by the network device to the terminal can only be used to schedule a plurality of carriers in one carrier set.

For example, as shown in FIG. 8A, the DCI A sent by the network device on the carrier 1 on the monitoring occasion n is used to schedule PDSCHs on two carriers in the carrier set 0, that is, the PDSCH 0 on the carrier 0 and the PDSCH 1 on the carrier 1. In addition, the network device further sends the DCI B on the carrier 4 on the monitoring occasion n, and the DCI B is used to schedule PDSCHs on three carriers in the carrier set 1, that is, the PDSCH 2 on the carrier 4, the PDSCH 3 on the carrier 5, and the PDSCH 4 on the carrier 7. The network device sends the DCI C on the monitoring occasion n+k, and the DCI C is used to schedule PDSCHs on two carriers in the carrier set 1, that is, the PDSCH 5 on the carrier 5 and the PDSCH 6 on the carrier 6. In this example, one piece of multi-carrier scheduling DCI sent by the network device can only be used to schedule the PDSCHs on a plurality of carriers in one carrier set.

The network device may further configure, for the terminal by using second configuration information, a maximum quantity of data blocks scheduled by using one piece of DCI on one carrier. A quantity of data blocks scheduled by using one piece of DCI on one carrier is less than or equal to the maximum quantity that is configured by the network device and that is of data blocks scheduled by using one piece of DCI on the carrier.

The first configuration information and the second configuration information may be carried in the RRC message or other signaling. For example, the second configuration information may be referred to as configuration information of a maximum quantity of codewords (where the codeword is another representation of the data block) scheduled by using the DCI, and the second configuration information may be a maxNrofCodeWordsScheduledByDCI information element in the RRC message.

In this implementation, the first HARQ-ACK codebook includes K HARQ feedback information groups, the K HARQ feedback information groups correspond to the K pieces of DCI for scheduling the N2 data channels, and one HARQ feedback information group includes $L_i$ pieces of HARQ feedback information. The $L_i$ pieces of HARQ feedback information include feedback information of a data block scheduled by using DCI corresponding to the HARQ feedback information group. $L_i$ is a sum of maximum quantities of data blocks scheduled by using pieces of DCI on carriers in a carrier set $i$ configured by the network device. The carrier set $i$ is a carrier set in which a data channel scheduled by using DCI corresponding to the HARQ feedback information group is located.

For example, the data block is a TB. In the example shown in FIG. 8A, the network device configures, for the terminal by using the second configuration information, a maximum quantity of data blocks scheduled by using one piece of DCI on each of the carrier 1, the carrier 3, and the carrier 7 as 2, and a maximum quantity of data blocks scheduled by using one piece of DCI on each of other carriers as 1. If only the three pieces of DCI shown in FIG. 8A are included to indicate to send the HARQ feedback information of the PDSCHs in the first slot, the first HARQ-ACK codebook sent by the terminal in the first slot includes the HARQ feedback information of the PDSCHs scheduled by using the three pieces of DCI (that is, K=3). Specifically, the first HARQ-ACK codebook includes three HARQ feedback information groups corresponding to the three pieces of DCI, including a HARQ feedback information group A corresponding to the DCI A, and the HARQ feedback information group A includes $L_0$ pieces of HARQ feedback information. $L_0$ is a sum of maximum quantities of data blocks scheduled by using pieces of DCI on a carrier in the carrier set 0 configured by the network device. In the carrier set 0, if a maximum quantity of data blocks scheduled by using one piece of DCI on each of the carrier 0 and the carrier 2 is 1, and a maximum quantity of data blocks scheduled by using one piece of DCI on each of the carrier 1 and the carrier 3 is 2, $L_0=2\times1+2\times2=6$. The six pieces of HARQ feedback information include one piece of HARQ feedback information corresponding to the carrier 0, two pieces of HARQ feedback information corresponding to the carrier 1, one piece of HARQ feedback information corresponding to the carrier 2, and one piece of HARQ feedback information corresponding to the carrier 3. For example, one piece of HARQ feedback information is one bit, "1" is set to indicate that a corresponding data block is successfully received, and "0" is set to indicate that the corresponding data block fails to be received. In this case, the HARQ feedback information group A includes six bits. If the terminal successfully receives TBs on the PDSCH 0 and the PDSCH 1, for example, the PDSCH 0 includes one TB, and the PDSCH 1 includes two TBs, the six bits in the HARQ feedback information group A are "111000". A 1st bit is HARQ feedback information of one TB on the PDSCH 0 on the carrier 0, the 1st bit indicates "1", and it indicates that one TB on the PDSCH 0 is successfully received. A 2nd bit and a 3rd bit are respectively HARQ feedback information of two TBs on the PDSCH 1 on the carrier 1, both the two bits indicate "1", and it indicates that both the two TBs on the PDSCH 1 are received. If the terminal fails to receive the TBs on the PDSCH 0 and the PDSCH 1, a bit corresponding to the TB indicates "0". However, if the DCI A is not used to schedule PDSCHs on the carrier 2 and the carrier 3, both a 4th bit corresponding to the carrier 2 and a 5th bit and a 6th bit corresponding to the carrier 3 indicate "0".

The three HARQ feedback information groups further include a HARQ feedback information group B corresponding to the DCI B, and the HARQ feedback information group B includes $L_1$ pieces of HARQ feedback information. $L_1$ is the sum of the maximum quantities of data blocks scheduled by using the pieces of DCI on the carrier in the carrier set 1 configured by the network device. It is assumed that in the carrier set 1, a maximum quantity of data blocks scheduled by using one piece of DCI on each of the carrier 4 to the carrier 6 is 1, and a maximum quantity of data blocks scheduled by using one piece of DCI on the carrier 7 is 2. In this case, $L_1=3\times1+2=5$. The HARQ feedback information group B includes five pieces of HARQ feedback information, and the five pieces of HARQ feedback information include one piece of HARQ feedback information corresponding to each of the carrier 4, the carrier 5, and the carrier 6, and further includes two pieces of HARQ feedback information corresponding to the carrier 7. Because the DCI B is not used to schedule a PDSCH on the carrier 6, HARQ feedback information corresponding to the carrier 6 indicates that a corresponding TB fails to be received. The terminal determines, depending on whether the corresponding TB is successfully received, that the other four pieces of HARQ feedback information indicate that the corresponding TB is successfully received or the corresponding TB fails to be received.

The three HARQ feedback information groups further include a HARQ feedback information group C corresponding to the DCI C. Because the DCI C is used to schedule a PDSCH in the carrier set 1, the HARQ feedback information group C also includes $L_1$ pieces of HARQ feedback information, where no PDSCH is scheduled on the carrier 4 and the carrier 7. In this case, one piece of HARQ feedback information corresponding to the carrier 4 and two pieces of HARQ feedback information corresponding to the carrier 7 both indicate that a corresponding TB fails to be received. The terminal determines, depending on whether TBs on PDSCHs on the carrier 5 and the carrier 6 are successfully received, HARQ feedback information corresponding to each TB on the carrier 5 and the carrier 6.

According to the foregoing solution, the terminal determines, based on the sum of the maximum quantities of data blocks scheduled by using the pieces of DCI on the carrier in the carrier set configured by the network device, a quantity of corresponding HARQ feedback information when the data channel in the carrier set is scheduled. In this way, the network device and the terminal can reach a consensus on a size of the feedback information. This can improve the transmission reliability of the HARQ-ACK codebook.

The first DCI may further include a total-downlink assignment index (total-DAI, T-DAI), and the T-DAI indicates a total count value of DCI in the DCI for scheduling the N2 data channels until the first monitoring occasion.

For example, the network device separately indicates, by using DCI A, DCI B, DCI C, and DCI D shown in FIG. 9, that HARQ feedback information of PDSCHs scheduled by using the four pieces of DCI is fed back in the first slot. A value before a comma in square brackets under the DCI shown in FIG. 9 indicates a cumulative count value indicated by a C-DAI, and a value after the comma indicates a total count value indicated by the T-DAI. On the monitoring occasion n, a C-DAI in the DCI A indicates that a cumulative count value of the DCI is 1, and a C-DAI in the DCI B indicates that a cumulative count value of the DCI is 2. Until the monitoring occasion n, cumulative counting is performed on the DCI A and the DCI B, and the total count value is 2. In this case, T-DAIs in both the DCI A and the DCI B indicate that the total count value is 2. A C-DAI in the DCI C indicates that a cumulative count value of the DCI is 3, and a C-DAI in the DCI D indicates that a cumulative count value of the DCI is 4. Therefore, until the monitoring occasion n+k, four pieces of DCI are cumulatively counted in total, and the total count value is 4. If the terminal does not detect the DCI D, the terminal may determine, based on that the total count value indicated by a T-DAI in the received DCI C until the monitoring occasion n+k is 4, that DCI in which a C-DAI indicates 4 is not detected. The terminal may still determine that the first HARQ-ACK codebook includes four HARQ feedback information groups, so that the terminal and the network device have a consistent understanding of a size of the first HARQ-ACK codebook. Even if the terminal does not detect the DCI D, the network device can successfully decode the first HARQ-ACK codebook.

In the implementation 2, the first C-DAI indicates a cumulative count value of a scheduled data channel in the N2 data channels until the first DCI. For the N2 data channels, data channels scheduled by using DCI are cumulatively counted first on a same occasion in ascending order of carrier identifiers of carriers on which the DCI for scheduling a data channel in the N2 data channels is located, and then in a time sequence of monitoring occasions to which the DCI belongs.

In other words, the first C-DAI indicates a cumulative count value obtained by performing counting on a pair of (PDCCH monitoring occasion, data channel) first in the time sequence of the monitoring occasions and then in ascending order of serving cell indexes of cells in which the DCI is located until a current monitoring occasion (that is, the first monitoring occasion on which the first DCI is located) and a carrier on which current DCI (that is, the first DCI) is located.

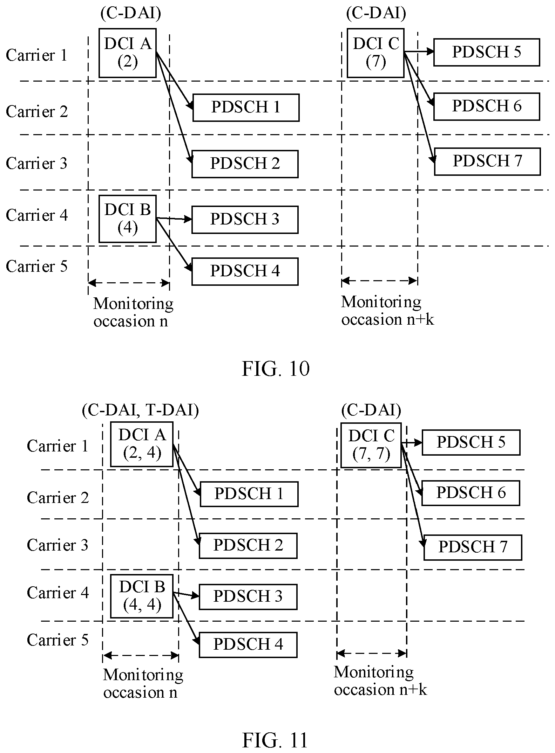

As shown in FIG. 10, the network device respectively sends DCI A and DCI B on a carrier 1 and a carrier 4 on a monitoring occasion n, and the DCI A is used to schedule a PDSCH 1 on a carrier 2 and a PDSCH 2 on a carrier 3 in a cross-carrier manner. The DCI B is used to schedule a PDSCH 3 and a PDSCH 4 that are respectively located on the carrier 4 and a carrier 5. Both timing indicators in the DCI A and the DCI B indicate the terminal to send HARQ feedback information of the PDSCHs in the first slot. For example, if DCI on a monitoring occasion n is DCI that appears earliest and that indicates to send HARQ feedback information of a PDSCH in the first slot, cumulative counting is first performed on a PDSCH scheduled by using DCI that is in the DCI and that is located on a carrier with a smallest carrier identifier. A carrier identifier of a carrier on which the DCI A is located is 1 and is less than a carrier identifier 4 of a carrier on which the DCI B is located. In this case, cumulative counting is first performed on the two PDSCHs scheduled by using the DCI A, a count value of the PDSCH 1 is 1, and a count value of the PDSCH 2 is 2. In this case, the cumulative count value of the scheduled PDSCH is 2 until the DCI A. In other words, until the monitoring occasion n and in ascending order of the carrier identifiers of the carriers on which the DCI is located until the DCI A, the cumulative count value of the scheduled PDSCH is 2. In this case, the C-DAI in the DCI A indicates 2. Similarly, the cumulative count value of the scheduled PDSCH is 4 until the DCI B. In this case, the C-DAI in the DCI B indicates 4. After the monitoring occasion n, a next piece of DCI that is sent by the network device and that indicates to send the HARQ feedback information of the PDSCH in the first slot is DCI C on the carrier 1 on a monitoring occasion n+k. The DCI C is used to schedule a total of three PDSCHs including a PDSCH 5, a PDSCH 6, and a PDSCH 7 that are respectively located on the carrier 1, the carrier 2, and the carrier 3. In other words, the cumulative count value of the scheduled PDSCHs is 7 until the DCI C. In this case, a C-DAI in the DCI C indicates 7. The terminal arranges, in ascending order of cumulative count values indicated by the C-DAIs in the DCI, the HARQ feedback information of the PDSCH sent in the first slot, to obtain the first HARQ-ACK codebook, where HARQ feedback information of a plurality of data channels scheduled by using same DCI is arranged in ascending order of carrier identifiers of carriers on which the data channels are located.

The first DCI may further include a T-DAI, and the T-DAI indicates a total count value of a scheduled data channel in the N2 data channels until the first monitoring occasion.

For example, as shown in FIG. 11, a total of three pieces of DCI including the DCI A, the DCI B, and the DCI C indicate to send the HARQ feedback information of the PDSCHs in the first slot, and HARQ feedback information of seven PDSCHs needs to be sent in the first slot. A total quantity of scheduled PDSCHs in the seven PDSCHs is 4 until the monitoring occasion n. In this case, T-DAIs in the DCI A and the DCI B indicate 4. A total quantity of scheduled PDSCHs in the seven PDSCHs is 7 until the monitoring occasion n+k. In this case, a T-DAI in the DCI C indicates 7. In other words, until the monitoring occasion n, a total quantity of PDSCHs scheduled by using DCI (including the DCI A and the DCI B) indicating to send the HARQ feedback information of the PDSCHs in the first slot is 4. In this case, the T-DAIs in both the DCI A and the DCI B indicate 4. Until the monitoring occasion n+k, a total quantity of PDSCHs scheduled by using DCI (including the DCI A, the DCI B, and the DCI C) indicating to send HARQ feedback information of the PDSCHs in the first slot is 7. In this case, the T-DAI in the DCI C indicates 7.

In the implementation 3, the first C-DAI indicates a cumulative count value of a data channel that is in the N1 data channels and that is located on a carrier with a smallest carrier identifier in the N2 data channels. For the N2 data channels, data channels scheduled on a same monitoring occasion are sequentially and cumulatively counted first in ascending order of carrier identifiers of carriers on which the data channels are located, and then in a time sequence of monitoring occasions to which DCI for scheduling the data channels belongs.

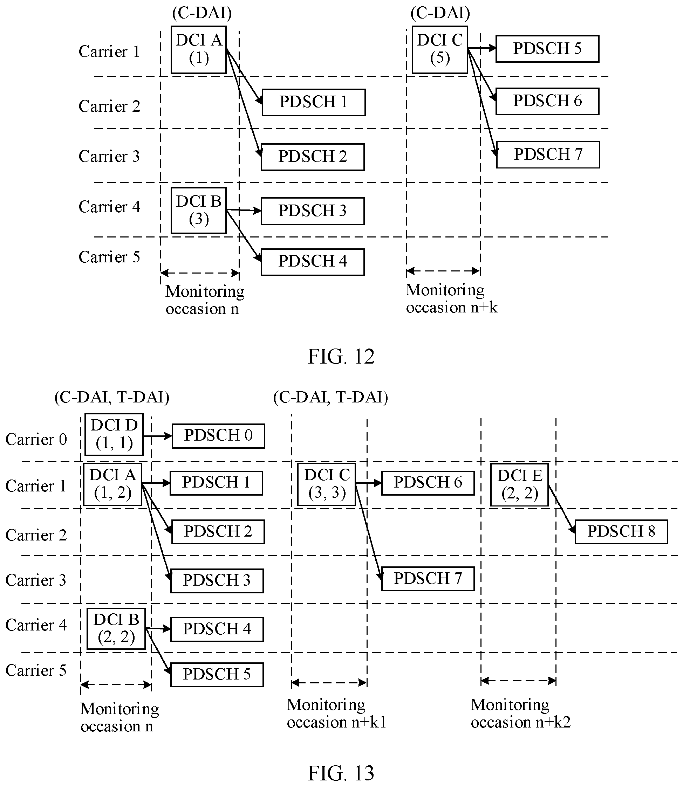

For example, as shown in FIG. 12, a total of three pieces of DCI including DCI A, DCI B, and DCI C indicate to send HARQ feedback information of PDSCHs in the first slot. PDSCHs scheduled on a same monitoring occasion are sequentially and cumulatively counted in ascending order of carrier identifiers of carriers on which the PDSCHs are located, and PDSCHs scheduled by using the DCI A and the DCI B on the monitoring occasion n are cumulatively counted in ascending order of carrier identifiers of carriers on which the PDSCHs are located. In this case, cumulative count values of a PDSCH 1 and a PDSCH 2 that are scheduled by using the DCI A are respectively 1 and 2, and a C-DAI in the DCI A indicates a cumulative count value of a PDSCH with a smaller cumulative count value in the two PDSCHs scheduled by using the DCI A, that is, the cumulative count value of 1 of the PDSCH 1. In other words, the C-DAI in the DCI A indicates a cumulative count value of a PDSCH that is in the two PDSCHs and that is located on a carrier with a smaller carrier identifier, that is, the C-DAI indicates 1. Similarly, a C-DAI in the DCI B indicates a cumulative count value of a PDSCH with a smaller cumulative count value, that is, a cumulative count value of 3 of a PDSCH 3. A total of three PSDCHs are scheduled by using DCI (including only DCI C) on a monitoring occasion n+k, and cumulative counting is sequentially performed in ascending order of carrier identifiers of carriers. In this case, the DCI C indicates a cumulative count value of 5 of a PDSCH with a smallest cumulative count value in three PDSCHs scheduled by using the DCI C. The terminal arranges, in ascending order of cumulative count values indicated by the C-DAIs in the DCI, the HARQ feedback information of the PDSCHs sent in the first slot, to obtain the first HARQ-ACK codebook, where a plurality of data channels scheduled by using same DCI are arranged in ascending order of carrier identifiers of carriers on which the data channels are located.

It should be noted that, in the implementation 2 and the implementation 3, the first HARQ-ACK codebook obtained by the terminal may include K HARQ feedback information groups, and each HARQ feedback information group may include L1 pieces of feedback information or L2 pieces of feedback information. For a specific implementation, refer to corresponding descriptions in the implementation 1. For brevity, details are not described herein again.

The first DCI may further include a T-DAI, and the T-DAI indicates a total count value of a scheduled data channel in the N2 data channels until the first monitoring occasion.

In the example shown in FIG. 12, a T-DAI indicated by each piece of DCI is the same as a T-DAI value indicated by each piece of DCI in the example shown in FIG. 11.

Optionally, in this embodiment of this application, the carrier on which the data channel scheduled by using the multi-carrier scheduling DCI is located belongs to a downlink carrier group, the downlink carrier group corresponds to an uplink control channel, and HARQ feedback information of a scheduled data channel on the downlink carrier group is carried on the uplink control channel.

FIG. 5 above is used as an example. The multi-carrier scheduling DCI A, DCI B, and DCI C shown in FIG. 5 are used to schedule the PDSCHs on the carrier 1 to the carrier 5. The carrier 1 to the carrier 5 belong to a same downlink carrier group, and the downlink carrier group corresponds to one PUCCH. Therefore, if the HARQ feedback information of the PDSCHs scheduled by using the DCI A, the DCI B, and the DCI C is carried on the PUCCH, the HARQ feedback information is specifically carried on the PUCCH corresponding to the downlink carrier group in the first slot. When the terminal has an uplink carrier aggregation capability, downlink carriers may be grouped, and HARQ feedback information of a PDSCH on a downlink carrier in each downlink carrier group is carried on one PUCCH on one uplink carrier, that is, each downlink carrier group corresponds to one PUCCH on one uplink carrier. The PUCCH may be referred to as a PUCCH group (PUCCH group). For HARQ feedback information that needs to be sent in the first slot and that is of PDSCHs on a same downlink carrier group that are scheduled by using the multi-carrier scheduling DCI, the terminal may generate a HARQ-ACK codebook based on the implementation described above, and send the HARQ-ACK codebook on a PUCCH corresponding to the downlink carrier group in the first slot.

In the foregoing implementation, a quantity $N_{C-DAI}^{DL}$ of bits of the C-DAI and a quantity $N_{T-DAI}^{DL}$ of bits of the T-DAI (if the DCI includes the T-DAI) in the DCI may be determined based on a maximum quantity of jointly scheduled PDSCHs.

For example, a maximum of eight PDSCHs are jointly scheduled. The C-DAI and the T-DAI each may include three bits to indicate a cumulative count value Y, that is, $N_{C-DAI}^{DL} = 3$, and $N_{T-DAI}^{DL} = 3$. For example, the C-DAI/T-DAI indicates the cumulative count value Y. Table 1 shows an example of a correspondence between values of the C-DAI and the T-DAI, where $T_D = 2^{N_{C-DAI}^{DL}} = 8$. In the table, a leftmost bit of the value of the C-DAI/T-DAI is a most significant bit, and a rightmost bit is a least significant bit.

Table 1

| Value of a C-DAI/T-DAI | Correspondence | Value of Y |
|---|---|---|
| 0,0,0 | $(Y - 1)\bmod T_D + 1 = 1$ | Cumulative index value: 1, 9, or ... |
| 0, 0, 1 | $(Y - 1)\bmod T_D + 1 = 2$ | Cumulative index value: 2, 10, or ... |
| 0, 1, 0 | $(Y - 1)\bmod T_D + 1 = 3$ | Cumulative index value: 3, 11, or ... |
| 0, 1, 1 | $(Y - 1)\bmod T_D + 1 = 4$ | Cumulative index value: 4, 12, or ... |
| 1,0,0 | $(Y - 1)\bmod T_D + 1 = 5$ | Cumulative index value: 5, 13, or ... |
| 1, 0, 1 | $(Y - 1)\bmod T_D + 1 = 6$ | Cumulative index value: 6, 14, or ... |
| 1, 1,0 | $(Y - 1)\bmod T_D + 1 = 7$ | Cumulative index value: 7, 15, or ... |
| 1, 1, 1 | $(Y - 1)\bmod T_D + 1 = 8$ | Cumulative index value: 8, 16, or ... |

In an implementation, each piece of DCI for scheduling the N2 data channels is used to schedule data channels on a plurality of carriers. In a same slot, a HARQ-ACK codebook is generated based on the HARQ feedback information of the data channel scheduled by using the multi-carrier scheduling DCI. In other words, the first HARQ-ACK codebook is a dedicated HARQ-ACK codebook that carries the feedback information of the data channel scheduled by using the multi-carrier scheduling DCI.

The feedback information sent by the terminal in S402 may further include a second HARQ-ACK codebook. The second HARQ-ACK codebook includes HARQ feedback information of N3 data channels. DCI for scheduling each of the N3 data channels is used to schedule only one data channel.

In other words, the N3 data channels are all data channels scheduled by using single-carrier scheduling DCI, and the single-carrier scheduling DCI is DCI for scheduling one data channel on one carrier. The DCI may be self-carrier scheduling DCI, to be specific, the DCI and the data channel scheduled by using the DCI are located on a same carrier. Alternatively, the DCI may be cross-carrier scheduling DCI, to be specific, the DCI and the data channel scheduled by using the DCI are located on different carriers.

As shown in FIG. 13, a total of three pieces of multi-carrier scheduling DCI including DCI A and DCI B on a monitoring occasion n and DCI C on a monitoring occasion n+k1 indicate to send HARQ feedback information of PDSCHs in the first slot. Cumulative counting may be performed on C-DAIs in the three pieces of multi-carrier scheduling DCI in one of the foregoing implementations 1 to 3. FIG. 13 shows an example in which cumulative counting is performed on the three pieces of multi-carrier scheduling DCI in the manner provided in the foregoing implementation 1. Optionally, the multi-carrier scheduling DCI may further include a T-DAI, as shown in FIG. 13. The terminal sends feedback information in the first slot, where the feedback information includes a first HARQ-ACK codebook. The first HARQ-ACK codebook includes HARQ feedback information of seven PDSCHs scheduled by using the three pieces of multi-carrier scheduling DCI that are arranged based on cumulative count values indicated by the C-DAIs. As shown in FIG. 13, the network device further respectively sends single-carrier scheduling DCI D and DCI E on the monitoring occasion n and a monitoring occasion n+k2, and both the DCI D and the DCI E indicate to send HARQ feedback information in the first slot. A C-DAI in the single-carrier scheduling DCI is used to perform cumulative counting on the single-carrier scheduling DCI, and the single-carrier scheduling DCI may further include a T-DAI. The feedback information sent by the terminal in the first slot further includes a second HARQ-ACK codebook. The second HARQ-ACK codebook includes HARQ feedback information of a PDSCH 0 and a PDSCH 8 that are arranged based on cumulative count values indicated by C-DAIs.

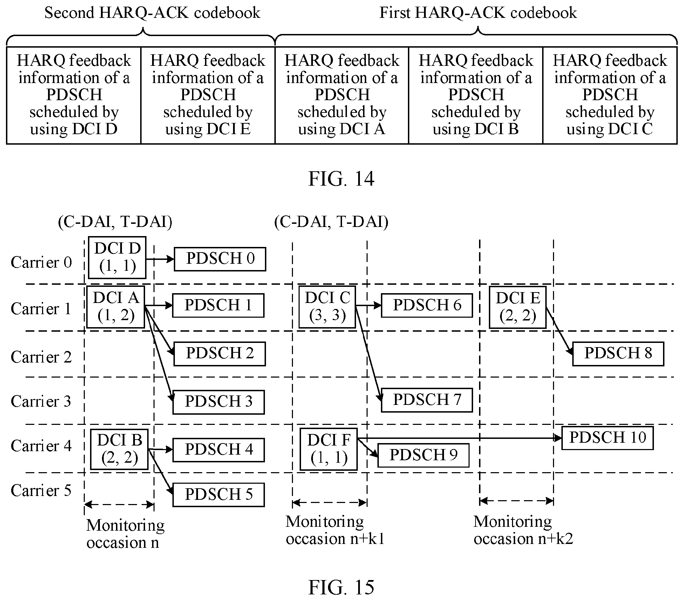

An arrangement order of the first HARQ-ACK codebook and the second HARQ-ACK codebook in the feedback information may be predefined in a protocol or configured by the network device for the terminal by using signaling. For example, it may be predefined that a HARQ-ACK codebook of a PDSCH scheduled by using the single-carrier scheduling DCI is arranged before a HARQ-ACK codebook of a PDSCH scheduled by using the multi-carrier scheduling DCI, and the second HARQ-ACK codebook in the feedback information is arranged before the first HARQ-ACK codebook, as shown in FIG. 14. It should be noted that, in a specific implementation, the feedback information may be referred to as a HARQ-ACK codebook, and the first HARQ-ACK codebook and the second HARQ-ACK codebook each may be a sub-codebook in the HARQ-ACK codebook, for example, a first HARQ-ACK sub-codebook and a second HARQ-ACK sub-codebook.

The feedback information sent by the terminal in S402 may further include a third HARQ-ACK codebook, and the third HARQ-ACK codebook includes HARQ feedback information of N4 data channels. DCI for scheduling each of the N4 data channels is used to schedule a plurality of data channels located in a plurality of time units. In other words, the N4 data channels are all data channels scheduled by using multi-time unit scheduling DCI, and the time unit may be but is not limited to a subframe, a slot, a mini-slot, or an OFDM symbol group. The multi-time unit scheduling DCI is DCI for scheduling a plurality of data channels in a plurality of time units.

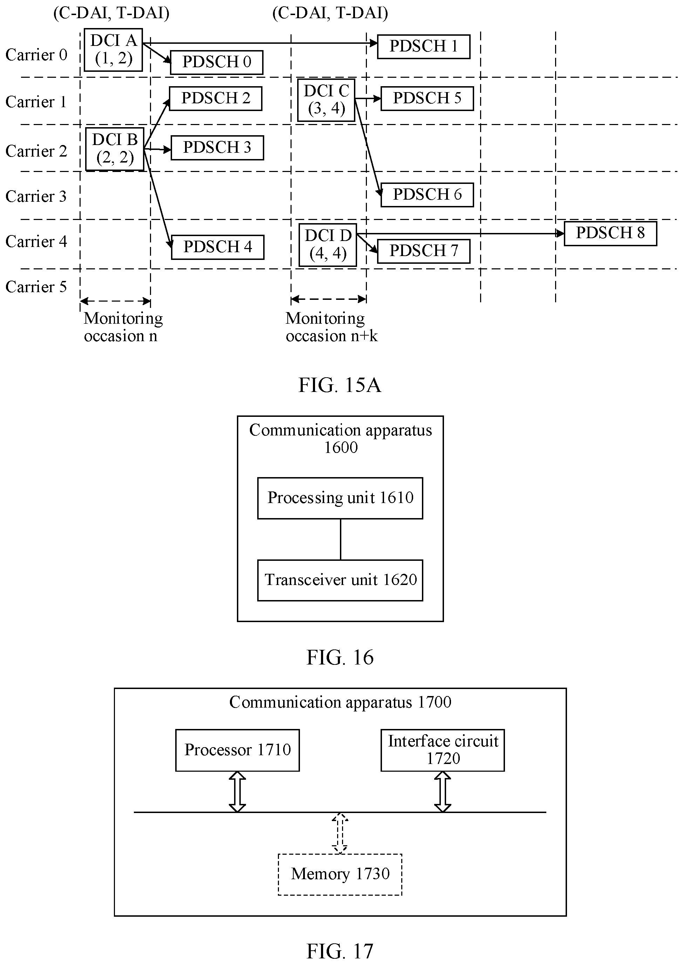

As shown in FIG. 15, in addition to the single-carrier scheduling DCI and the multi-carrier scheduling DCI shown in FIG. 13, the network device further sends DCI F on the monitoring occasion n+k1. The DCI F is used to schedule a PDSCH 9 and a PDSCH 10 in two time units, and the DCI F indicates to send HARQ feedback information in the first slot. A C-DAI in the DCI F indicates 1, and a C-DAI in the multi-time unit scheduling DCI is used to perform cumulative counting on the multi-time unit DCI. The DCI F may further include a T-DAI. The feedback information sent by the terminal in the first slot further includes the third HARQ-ACK codebook, and the third HARQ-ACK codebook includes HARQ feedback information of the PDSCH 9 and the PDSCH 10 scheduled by using the multi-time unit DCI. An arrangement order of a plurality of HARQ-ACK codebooks in the feedback information may be predefined in a protocol, or may be configured by the network device by using communication signaling. In the feedback information, the three HARQ-ACK codebooks may be sequentially arranged in an arrangement order of the second HARQ-ACK codebook, the first HARQ-ACK codebook, and the third HARQ-ACK codebook.

In another implementation, in addition to the feedback information of the N2 data channels (that is, includes the feedback information of the N2 data channels scheduled by using the multi-carrier scheduling DCI), the first HARQ-ACK codebook further includes the HARQ feedback information of the N4 data channels, and the DCI for scheduling each of the N4 data channels is used to schedule a plurality of data channels located in a plurality of time units. In other words, the first HARQ-ACK codebook further includes the feedback information of the N4 data channels scheduled by using the multi-time unit scheduling DCI.

In this implementation, the C-DAI in the multi-carrier scheduling DCI and the C-DAI in the multi-time unit scheduling DCI are used to perform joint cumulative counting on the multi-carrier scheduling DCI and the multi-time unit scheduling DCI.

The first C-DAI in the first DCI indicates a cumulative count value of the first DCI in G pieces of DCI, and the G pieces of DCI include the DCI for scheduling the N2 data channels and the DCI for scheduling the N4 data channels. For the G pieces of DCI, DCI on a same monitoring occasion are sequentially and cumulatively counted first in ascending order of serving cell indexes of cells in which the DCI is located, and then in a time sequence of monitoring occasions to which the DCI belongs.

For example, as shown in FIG. 15A, the network device sends the DCI A on a carrier 0 and sends the DCI B on a carrier 2 on the monitoring occasion n. The DCI A is multi-time unit scheduling DCI, and is used to schedule a PDSCH 0 and a PDSCH 1 that are located in different time units. The DCI B is multi-carrier scheduling DCI, and is used to schedule a PDSCH 2, a PDSCH 3, and a PDSCH 4 that are located on different carriers. The C-DAI is used to perform joint counting on the multi-carrier scheduling DCI and multi-slot scheduling DCI. If both HARQ timing indicators in the DCI A and the DCI B indicate the terminal to send, in the first slot, HARQ feedback information of PDSCHs scheduled by using the DCI A and the DCI B, and DCI on the monitoring occasion n is DCI that appears earliest and that indicates to send HARQ feedback information of a PDSCH in the first slot, because a carrier identifier of a carrier on which the DCI A is located is 0, and is less than a carrier identifier 2 of a carrier on which the DCI B is located, a C-DAI in the DCI A indicates that a cumulative count value of the DCI is 1, and a C-DAI in the DCI B indicates that a cumulative count value of the DCI is 2. The network device sends DCI C and DCI D on the monitoring occasion n+k. The DCI C is multi-carrier scheduling DCI, and is used to schedule a PDSCH 5 and a PDSCH 6 that are located on different carriers. The DCI D is multi-time unit scheduling DCI, and is used to schedule a PDSCH 7 and a PDSCH 8 that are located in different time units. Both HARQ timing indicators in the DCI C and the DCI D indicate the terminal to send, in the first slot, HARQ feedback information of PDSCHs scheduled by using the DCI C and the DCI D. Because a carrier identifier of a carrier on which the DCI C is located is 1, and is less than a carrier identifier 4 of a carrier on which the DCI D is located, a C-DAI in the DCI C indicates that a cumulative count value of the DCI is 3, and a C-DAI in the DCI D indicates that a cumulative count value of the DCI is 4.

Optionally, the multi-carrier scheduling DCI and the multi-time unit scheduling DCI further include a T-DAI, and the T-DAI is also used to perform joint counting on the multi-carrier scheduling DCI and the multi-time unit scheduling DCI. In this case, the T-DAI indicates a total count value of DCI in the G pieces of DCI until a current monitoring occasion.

As shown in FIG. 15A, until the monitoring occasion n, a total count value of feedback information that is of a scheduled PDSCH and that is sent by the network device in the multi-carrier scheduling DCI and the multi-time unit scheduling DCI that are sent in the first slot is 2, that is, the DCI A and the DCI B are included. In this case, the T-DAI in the DCI A and the DCI B indicates 2. Until the monitoring occasion n+k, a total count value of feedback information that is of a scheduled PDSCH and that is sent by the network device in the multi-carrier scheduling DCI and the multi-time unit scheduling DCI that are sent in the first slot is 4, that is, the DCI A, the DCI B, the DCI C, and the DCI D are included. In this case, the T-DAI in the DCI C and the DCI D on the monitoring occasion n+k indicates 4.

The terminal device may determine the first HARQ-ACK codebook based on the C-DAI. The first HARQ-ACK codebook includes G HARQ feedback information groups, and the G HARQ feedback information groups correspond to the G pieces of DCI for scheduling the N2 data channels and the N4 data channels. One HARQ feedback information group includes L3 pieces of HARQ feedback information, and the L3 pieces of HARQ feedback information include HARQ feedback information of a plurality of data channels scheduled by using DCI corresponding to the HARQ feedback information group. L3 is a larger one of L4 and L5, L4 is a maximum quantity of data blocks scheduled by using one piece of multi-carrier scheduling DCI, and L5 is a maximum quantity of data blocks scheduled by using the multi-time unit scheduling DCI.

If a maximum quantity of data blocks that can be carried on one data channel is D, and one piece of multi-carrier scheduling DCI is used to schedule a maximum of $N_{max}^{CC}$ data channels on a plurality of carriers, the maximum quantity of data blocks that can be scheduled by using one piece of multi-carrier scheduling DCI is $L4=N_{max}^{CC} \times D$. If one piece of multi-time unit scheduling DCI is used to schedule a maximum of $N_{max}^{TU}$ data channels in a plurality of time units (time units, TUs), the maximum quantity of data blocks that can be scheduled by using one piece of multi-time unit scheduling DCI is $L5=N_{max}^{TU} \times D$. In this case, L3=max(L4, L5). If L4 is greater than L5, L3=L4; or if L4 is less than L5, L3=L5.

For example, if a maximum quantity of TBs that can be carried on one PDSCH is D=2, and one piece of multi-carrier scheduling DCI can be used to schedule a maximum of four PDSCHs on a plurality of carriers, that is, $N_{max}^{CC} = 4$, L4=2×4=8. If one piece of multi-time unit scheduling DCI can be used to schedule a maximum of eight time units, that is, $N_{max}^{TU} = 8$, L5=2×8=16. In this case, L5 is greater than L4, and L3=L5=16. In the example shown in FIG. 15A, if the network device sends the DCI A, the DCI B, the DCI C, and the DCI D before the first slot, the four pieces of multi-carrier scheduling DCI and the multi-time unit scheduling DCI indicate to send corresponding HARQ feedback information in the first slot, that is, G=4, and a maximum value of the C-DAI in the four pieces of DCI is 4. If the T-DAI is included, a maximum value of the T-DAI is also 4. The terminal sends the first HARQ-ACK codebook in the first slot, where the first HARQ-ACK codebook includes four HARQ feedback information groups, the four HARQ feedback information groups sequentially correspond to the four pieces of DCI based on values of the C-DAIs, and each HARQ feedback information group includes 16 pieces of feedback information. A HARQ feedback information group A in the four HARQ feedback information groups includes 16 pieces of HARQ feedback information corresponding to the DCI A, and the 16 pieces of HARQ feedback information include HARQ feedback information of TBs on the PDSCH 0 and the PDSCH 1 that are scheduled by using the DCI A. For example, the PDSCH 0 and the PDSCH 1 each include two TBs. In this case, the 16 pieces of HARQ feedback information include four pieces of HARQ feedback information of the TBs on the PDSCH 0 and the PDSCH 1 that are scheduled by using the DCI A. For example, if one piece of HARQ feedback information is one bit, the first four bits in the 16 pieces of HARQ feedback information may sequentially correspond to two TBs on the PDSCH 0 and two TBs on the PDSCH 1. 12 bits other than the first four bits in the 16 pieces of HARQ feedback information are set to "0". In addition, the four HARQ feedback information groups further include a HARQ feedback information group B corresponding to the DCI B, a HARQ feedback information group C corresponding to the DCI C, and a HARQ feedback information group D corresponding to the DCI D, and 16 pieces of feedback information in each HARQ feedback information group each include HARQ feedback information of a TB on a PDSCH scheduled by using corresponding DCI.

According to the foregoing solution, the C-DAI is used to perform joint cumulative counting on the multi-carrier scheduling DCI and the multi-time unit scheduling DCI, so that the terminal device can learn of a cumulative count value of the multi-carrier scheduling DCI and the multi-time unit scheduling DCI that are sent by the network device, and determine the size of the first HARQ-ACK codebook and a location of the HARQ feedback information in the codebook based on the C-DAI. In this way, the network device and the terminal device can reach a consensus on the size of the first HARQ-ACK codebook and the location of the HARQ feedback information in the codebook, and transmission reliability of the HARQ-ACK codebook is improved. In an implementation, when one or more data channels in a plurality of data channels scheduled by using one piece of multi-carrier scheduling DCI conflict with a semi-statically configured uplink symbol or downlink symbol (that is, the multi-carrier scheduling DCI indicates that the one or more data channels occupy the semi-statically configured uplink symbol or downlink symbol), the terminal device does not expect to receive the one or more data channels. In the first HARQ-ACK codebook, HARQ feedback information of the one or more data channels indicates that a data block on the data channel fails to be received.

For example, if the first DCI is used to schedule a plurality of PDSCHs on a plurality of carriers, and a PDSCH 1 in the plurality of PDSCHs occupies a symbol 2 to a symbol 7 in a slot s in time domain, where the symbol 7 is a semi-statically configured uplink symbol, the terminal does not receive the PDSCH 1. HARQ feedback information of the PDSCH 1 in the first HARQ-ACK codebook indicates that a data block on the PDSCH 1 fails to be received.

An embodiment of this application further provides DCI for activating or deactivating semi-persistent scheduling (semi-persistent scheduling, SPS) data channels on a plurality of carriers. The SPS data channel is a data channel that periodically appears at a specific time interval after being activated. The semi-persistent data channel may also be referred to as a semi-static scheduling (semi-static scheduling) data channel.

The network device may send second DCI to the terminal, where the second DCI is used to activate SPS data channels on P carriers, and P is an integer greater than 1. After receiving the second DCI, the terminal may determine, based on the second DCI, that the SPS data channels on the P carriers are activated. For example, if the SPS data channels on the P carriers are PDSCHs, the terminal may receive downlink data on the SPS data channels in each periodicity on the P carriers. Alternatively, if the SPS data channels on the P carriers are PUSCHs, the terminal may send uplink data on the SPS data channels on a plurality of carriers in the P carriers.

A DCI format (format) of the second DCI may be the same as a DCI format of the first DCI. The DCI format may include an indication field, indicating that DCI that is in the DCI format and that is sent by the network device is DCI for scheduling data channels on a plurality of carriers or DCI for activating SPS data channels on a plurality of carriers.

The network device may send third DCI to the terminal, where the third DCI is used to deactivate SPS data channels on Q carriers, and Q is an integer greater than 1. After receiving the third DCI, the terminal may determine, based on the third DCI, that the SPS data channels on the Q carriers are deactivated, in other words, the SPS data channels indicated by the third DCI no longer periodically appear on the Q carriers. The Q carriers may be some or all of the P carriers, or the Q carriers may include some of the P carriers and a carrier other than the P carriers. Alternatively, the Q carriers may be carriers other than the P carriers.

A DCI format of the third DCI may be the same as the DCI format of the first DCI. The DCI format may include an indication field, indicating that DCI in the DCI format is DCI for scheduling data channels on a plurality of carriers or DCI for deactivating SPS data channels on a plurality of carriers.

In an implementation, the DCI formats of the first DCI, the second DCI, and the third DCI are the same, the DCI format includes an indication field 1, and the indication field 1 indicates that DCI that is in the DCI format and that is sent by the network device is DCI for scheduling data channels on a plurality of carriers or DCI for activating or deactivating SPS data channels on a plurality of carriers.

For example, the indication field 1 may be two bits in the DCI. The two bits indicate that a first value indicates that the DCI in the DCI format is used to schedule data channels on a plurality of carriers, indicate that a second value indicates that the DCI in the DCI format is used to activate SPS data channels on a plurality of carriers, and indicate that a third value indicates that the DCI in the DCI format is used to deactivate SPS data channels on a plurality of carriers.

For another example, the indication field 1 may reuse one or more indication fields in current DCI. For example, the indication field 1 may include a frequency domain resource assignment (frequency domain resource assignment, FDRA) indication field and a modulation and coding scheme (modulation and coding scheme, MCS) indication field. When all bits of the FDRA indication field are set to "0", and all bits of the MCS indication field are not all "1", it may indicate that the DCI is used to activate the SPS data channel (that is, the DCI is the second DCI). When all bits of the MCS indication field are set to "1", it may indicate that the DCI is used to deactivate the semi-persistent data channel (that is, the DCI is the third DCI). When all bits of the FDRA indication field are not all "0", and all bits of the MCS indicator field are not all "1", it may indicate that the DCI is used to dynamically schedule data channels on a plurality of carriers.

It may be understood that, to implement functions in the foregoing embodiments, the base station and the terminal include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

FIG. 16 and FIG. 17 are diagrams of structures of possible communication apparatuses according to embodiments of this application. These communication apparatuses may be configured to implement functions of the terminal or the network device in the foregoing method embodiments, and therefore can also implement beneficial effects of the foregoing method embodiments. In embodiments of this application, the communication apparatus may be one of the terminals 120a to 120j shown in FIG. 1, may be the network device 110a or 110b shown in FIG. 1, or may be a module (such as a chip) used in the terminal or the network device.

As shown in FIG. 16, a communication apparatus 1600 includes a processing unit 1610 and a transceiver unit 1620. The communication apparatus 1600 is configured to implement the functions of the terminal or the network device in the method embodiment shown in FIG. 4.

When the communication apparatus 1600 is configured to implement the functions of the terminal in the method embodiment shown in FIG. 4, the transceiver unit 1620 is configured to receive first DCI from the network device. The first DCI includes scheduling information of N1 data channels in W cells and a first counter-downlink assignment index C-DAI. W and N1 are integers greater than 1, and W is less than or equal to N1. The processing unit 1610 is configured to determine feedback information including a first HARQ-ACK codebook. The first HARQ-ACK codebook includes HARQ feedback information of N2 data channels, N2 is an integer greater than 1, and the N2 data channels include the N1 data channels. An arrangement order of HARQ feedback information of the N1 data channels in the first HARQ-ACK codebook is determined based on the first C-DAI. The transceiver unit 1620 is further configured to send the feedback information to the network device.

When the communication apparatus 1600 is configured to implement the functions of the network device in the method embodiment shown in FIG. 4, the transceiver unit 1620 is configured to send first DCI to the terminal. The first DCI includes scheduling information of N1 data channels in W cells and a first counter-downlink assignment index C-DAI. W and N1 are integers greater than 1, and W is less than or equal to N1. In addition, the transceiver unit 1620 is further configured to receive feedback information from the terminal. The feedback information includes a first hybrid automatic repeat request-acknowledge HARQ-ACK codebook, the first HARQ-ACK codebook includes HARQ feedback information of N2 data channels, N2 is an integer greater than 1, and the N2 data channels include the N1 data channels. The processing unit 1610 is configured to determine an arrangement order of HARQ feedback information of the N1 data channels in the first HARQ-ACK codebook based on the first C-DAI.

For more detailed descriptions of the processing unit 1610 and the transceiver unit 1620, refer to related descriptions in the method embodiment shown in FIG. 4.

As shown in FIG. 17, a communication apparatus 1700 includes a processor 1710 and an interface circuit 1720. The processor 1710 and the interface circuit 1720 are coupled to each other. It may be understood that the interface circuit 1720 may be a transceiver or an input/output interface. Optionally, the communication apparatus 1700 may further include a memory 1730, configured to: store instructions executed by the processor 1710, store input data needed by the processor 1710 to run the instructions, or store data generated after the processor 1710 runs the instructions.

When the communication apparatus 1700 is configured to implement the method shown in FIG. 4, the processor 1710 is configured to implement a function of the processing unit 1610, and the interface circuit 1720 is configured to implement a function of the transceiver unit 1620.

When the communication apparatus is a chip used in a terminal, the chip in the terminal implements the functions of the terminal in the foregoing method embodiments. The chip in the terminal receives information from another module (for example, a radio frequency module or an antenna) in the terminal, where the information is sent by a network device to the terminal. Alternatively, the chip in the terminal sends information to another module (for example, the radio frequency module or the antenna) in the terminal, where the information is sent by the terminal to the network device.

When the communication apparatus is a module used in a network device, the module in the network device implements the functions of the network device in the foregoing method embodiments. The module in the network device receives information from another module (for example, a radio frequency module or an antenna) in the network device, where the information is sent by a terminal to the network device. Alternatively, the module in the network device sends information to another module (for example, the radio frequency module or the antenna) in the network device, where the information is sent by the network device to the terminal. The module in the network device herein may be a baseband chip of the network device, or may be a DU or another module. The DU herein may be a DU in an open radio access network (open radio access network, O-RAN) architecture.

It may be understood that the processor in embodiments of this application may be a central processing unit (Central Processing Unit, CPU), may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a transistor logic device, a hardware component, or any combination thereof. The general-purpose processor may be a microprocessor, or may be any conventional processor.

The method steps in embodiments of this application may be implemented in hardware, or may be implemented in software instructions that can be executed by the processor. The software instructions may include a corresponding software module, and the software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium known in the art. For example, a storage medium is coupled to the processor, so that the processor can read information from the storage medium and can write information into the storage medium. The storage medium may alternatively be a component of the processor. The processor and the storage medium may be disposed in an ASIC. In addition, the ASIC may be located in a network device or a terminal. The processor and the storage medium may alternatively exist in the network device or the terminal as discrete components.

All or some of the foregoing embodiments may be implemented by software, hardware, firmware, or any combination thereof. When the software is used for implementation, all or some of embodiments may be implemented in a form of a computer program product. The computer program product includes one or more computer programs or instructions. When the computer program or the instructions are loaded and executed on a computer, all or some of the procedures or functions in embodiments of this application are performed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or there is a logic conflict, terms and/or descriptions in different embodiments are consistent and may be mutually referenced, and technical features in different embodiments may be combined to form a new embodiment based on internal logical relationships of different embodiments.

**Claims**

1. A hybrid automatic repeat request-acknowledge HARQ-ACK codebook feedback method, performed by a terminal or a module used in a terminal, and comprising:

   receiving first downlink control information DCI from a network device, wherein the first DCI comprises scheduling information of N1 data channels in W cells and a first counter-downlink assignment index C-DAI, W and N1 are integers greater than 1, and W is less than or equal to N1; and
   sending feedback information to the network device, wherein the feedback information comprises a first hybrid automatic repeat request-acknowledge HARQ-ACK codebook, the first HARQ-ACK codebook comprises HARQ feedback information of N2 data channels, N2 is an integer greater than or equal to N1, the N2 data channels comprise the N1 data channels, and an arrangement order of HARQ feedback information of the N1 data channels in the first HARQ-ACK codebook is determined based on the first C-DAI.

2. The method according to claim 1, wherein the first C-DAI indicates a cumulative count value of the first DCI in DCI for scheduling the N2 data channels, and for the DCI for scheduling the N2 data channels, DCI on a same monitoring occasion is sequentially and cumulatively counted first in ascending order of serving cell indexes of cells on which the DCI is transmitted, and then in a time sequence of monitoring occasions to which the DCI belongs.

3. The method according to claim 2, wherein if a plurality of pieces of DCI in the DCI for scheduling the N2 data channels are on a same monitoring occasion and in a same cell, the plurality of pieces of DCI are sequentially and cumulatively counted in ascending order or descending order of serving cell indexes of cells on which reference data channels scheduled by each of the plurality of pieces of DCI are transmitted, and the reference data channel scheduled by using the DCI is a data channel that is in data channels scheduled by using the DCI and that is transmitted on a cell with a smallest serving cell index, or the reference data channel is a data channel that is in data channels scheduled by using the DCI and that is used to determine a time unit for sending HARQ feedback information.

4. The method according to claim 1, wherein the first C-DAI indicates a cumulative count value of a scheduled data channel in the N2 data channels until the first DCI, and for the N2 data channels, data channels scheduled by using DCI are cumulatively counted first on a same occasion in ascending order of serving cell indexes of cells in which the DCI for scheduling the data channel is located, and then in a time sequence of monitoring occasions to which the DCI belongs.

5. The method according to any one of claims 1 to 4, wherein the first DCI further comprises a total-downlink assignment index T-DAI; and

   the T-DAI indicates a total count value of a scheduled data channel in the N2 data channels until a first monitoring occasion, and the first monitoring occasion is a monitoring occasion on which the first DCI is transmitted; or
   the T-DAI indicates a total count value of DCI for scheduling the N2 data channels until a first monitoring occasion.

6. The method according to any one of claims 1 to 5, wherein each piece of DCI for scheduling the N2 data channels is used to schedule a plurality of data channels in a plurality of cells.

7. The method according to claim 6, wherein the first HARQ-ACK codebook comprises K HARQ feedback information groups, K is a quantity of DCI for scheduling the N2 data channels, one HARQ feedback information group comprises L1 pieces of HARQ feedback information, the L1 pieces of HARQ feedback information comprise HARQ feedback information of a data channel scheduled by using one piece of DCI, L1 is a maximum quantity of data blocks scheduled by using one piece of DCI, L1 is greater than or equal to N1, and the data channel is used to carry at least one data block.

8. The method according to claim 6, wherein the first HARQ-ACK codebook comprises K feedback information groups, one HARQ feedback information group comprises L2 pieces of HARQ feedback information, the L2 pieces of HARQ feedback information comprise HARQ feedback information of a data channel group to which a data channel scheduled by using one piece of DCI belongs, L2 is less than or equal to N1, and L2 is a maximum quantity of data channel groups scheduled by using one piece of DCI.

9. A hybrid automatic repeat request-acknowledge HARQ-ACK codebook feedback method, performed by a network device or a module used in a network device, and comprising:

sending first downlink control information DCI to a terminal, wherein the first DCI comprises scheduling information of N1 data channels in W cells and a first counter-downlink assignment index C-DAI, W and N1 are integers greater than 1, and W is less than or equal to N1; and
receiving feedback information from the terminal, wherein the feedback information comprises a first hybrid automatic repeat request-acknowledge HARQ-ACK codebook, the first HARQ-ACK codebook comprises HARQ feedback information of N2 data channels, N2 is an integer greater than or equal to N1, the N2 data channels comprise the N1 data channels, and an arrangement order of HARQ feedback information of the N1 data channels in the first HARQ-ACK codebook is determined based on the first C-DAI.

10. The method according to claim 9, wherein the first C-DAI indicates a cumulative count value of the first DCI in DCI for scheduling the N2 data channels, and for the DCI for scheduling the N2 data channels, DCI on a same monitoring occasion is sequentially and cumulatively counted first in ascending order of serving cell indexes of cells on which the DCI is transmitted, and then in a time sequence of monitoring occasions to which the DCI belongs.

11. The method according to claim 10, wherein if a plurality of pieces of DCI in the DCI for scheduling the N2 data channels are on a same monitoring occasion and in a same cell, the plurality of pieces of DCI are sequentially and cumulatively counted in ascending order or descending order of serving cell indexes of cells on which reference data channels scheduled by each of the plurality of pieces of DCI are transmitted, and the reference data channel scheduled by using the DCI is a data channel that is in data channels scheduled by using the DCI and that is located in a cell with a smallest serving cell index, or the reference data channel is a data channel that is in data channels scheduled by using the DCI and that is used to determine a time unit for sending HARQ feedback information.

12. The method according to claim 9, wherein the first C-DAI indicates a cumulative count value of a scheduled data channel in the N2 data channels until the first DCI, and for the N2 data channels, data channels scheduled by using DCI are cumulatively counted first on a same occasion in ascending order of serving cell indexes of cells in which the DCI for scheduling the data channel is located, and then in a time sequence of monitoring occasions to which the DCI belongs.

13. The method according to any one of claims 9 to 12, wherein the first DCI further comprises a total-downlink assignment index T-DAI; and

the T-DAI indicates a total count value of a scheduled data channel in the N2 data channels until a first monitoring occasion, and the first monitoring occasion is a monitoring occasion for receiving the first DCI; or
the T-DAI indicates a total count value of DCI for scheduling the N2 data channels until a first monitoring occasion.

14. The method according to any one of claims 9 to 13, wherein each piece of DCI for scheduling the N2 data channels is used to schedule a plurality of data channels in a plurality of cells.

15. The method according to claim 14, wherein the first HARQ-ACK codebook comprises K HARQ feedback information groups, K is a quantity of DCI for scheduling the N2 data channels, one HARQ feedback information group comprises L1 pieces of HARQ feedback information, the L1 pieces of HARQ feedback information comprise HARQ feedback information of a data channel scheduled by using one piece of DCI, L1 is a maximum quantity of data blocks scheduled by using one piece of DCI, L1 is greater than or equal to N1, and the data channel is used to carry at least one data block.

16. The method according to claim 14, wherein the first HARQ-ACK codebook comprises K feedback information groups, one HARQ feedback information group comprises L2 pieces of HARQ feedback information, the L2 pieces of HARQ feedback information comprise HARQ feedback information of a data channel group to which a data channel scheduled by using one piece of DCI belongs, L2 is less than or equal to N1, and L2 is a maximum quantity of data channel groups scheduled by using one piece of DCI.

17. A communication apparatus, comprising:

   a transceiver unit, configured to receive first downlink control information DCI from a network device, wherein the first DCI comprises scheduling information of N1 data channels in W cells and a first counter-downlink assignment index C-DAI, W and N1 are integers greater than 1, and W is less than or equal to N1; and
   a processing unit, configured to determine feedback information, wherein the feedback information comprises a first hybrid automatic repeat request-acknowledge HARQ-ACK codebook, the first HARQ-ACK codebook comprises HARQ feedback information of N2 data channels, N2 is an integer greater than or equal to N1, the N2 data channels comprise the N1 data channels, and an arrangement order of HARQ feedback information of the N1 data channels in the first HARQ-ACK codebook is determined based on the first C-DAI, wherein the transceiver unit is further configured to send the feedback information to the network device.

18. A communication apparatus, comprising:

   a processing unit, configured to determine first downlink control information DCI, wherein the first DCI comprises scheduling information of N1 data channels in W cells and a first counter-downlink assignment index C-DAI, W and N1 are integers greater than 1, and W is less than or equal to N1; and
   a transceiver unit, configured to send the first DCI to a terminal, wherein
   the transceiver unit is configured to receive feedback information from the terminal, wherein the feedback information comprises a first hybrid automatic repeat request-acknowledge HARQ-ACK codebook, the first HARQ-ACK codebook comprises HARQ feedback information of N2 data channels, N2 is an integer greater than or equal to N1, the N2 data channels comprise the N1 data channels, and an arrangement order of HARQ feedback information of the N1 data channels in the first HARQ-ACK codebook is determined based on the first C-DAI.

19. A communication apparatus, comprising a processor and an interface circuit, wherein the interface circuit is configured to: receive a signal from another communication apparatus and transmit the signal to the processor, or send a signal from the processor to another communication apparatus, and the processor is configured to implement the method according to any one of claims 1 to 16 by using a logic circuit or by executing code instructions.

20. A computer-readable storage medium, wherein the storage medium stores a computer program or instructions, and when the computer program or the instructions are executed by a communication apparatus, the method according to any one of claims 1 to 16 is implemented.

FIG. 1

FIG. 2

FIG. 3

400

| Network device | | Terminal |

S401: Send first DCI, where the first DCI includes scheduling information of N1 data channels on W carriers, the first DCI includes a first C-DAI, W and N1 are integers greater than 1, and W is less than or equal to N1

S402: Send feedback information, where the feedback information includes a first HARQ-ACK codebook, the first HARQ-ACK codebook includes HARQ feedback information of N2 data channels, the N2 data channels include the N1 data channels, an arrangement order of HARQ feedback information of the N1 data channels in the first HARQ-ACK codebook is determined based on the first C-DAI, and N2 is an integer greater than or equal to 1

FIG. 4

(C-DAI)                    (C-DAI)

Carrier 1   DCI A → PDSCH 1      DCI C → PDSCH 6
            (1)                  (3)

Carrier 2         → PDSCH 2

Carrier 3         → PDSCH 3              → PDSCH 7

Carrier 4   DCI B → PDSCH 4
            (2)

Carrier 5         → PDSCH 5

Monitoring              Monitoring
occasion n              occasion n+k

FIG. 5

Slot x | Slot x+1

Carrier 0 | DCI A | DCI B | PDSCH 1

Carrier 1 | PDSCH 2

Carrier 2 | PDSCH 3

Carrier 3 | PDSCH 4

Monitoring
occasion

FIG. 6

11111000, 11110000, 10100000

Correspond   Correspond   Correspond
to DCI A     to DCI B     to DCI C
(C-DAI=1)    (C-DAI=2)    (C-DAI=3)

FIG. 7

(C-DAI)                           (C-DAI)

Carrier 1 |                  PDSCH 1    | DCI B (2) | PDSCH 6

Carrier 2 |                  PDSCH 2    |             PDSCH 7

Carrier 3 | DCI A (1)        PDSCH 3    |             PDSCH 8

Carrier 4 |                  PDSCH 4    |             PDSCH 9

Carrier 5 |                  PDSCH 5

Monitoring          Monitoring
occasion n          occasion n+k

FIG. 8

FIG. 8A

FIG. 9

(C-DAI)        (C-DAI)

Carrier 1 DCI A (2)      DCI C (7) → PDSCH 5

Carrier 2    PDSCH 1     PDSCH 6

Carrier 3    PDSCH 2     PDSCH 7

Carrier 4 DCI B (4) → PDSCH 3

Carrier 5    PDSCH 4

Monitoring occasion n    Monitoring occasion n+k

FIG. 10

(C-DAI, T-DAI)      (C-DAI)

Carrier 1 DCI A (2, 4)     DCI C (7, 7) → PDSCH 5

Carrier 2    PDSCH 1     PDSCH 6

Carrier 3    PDSCH 2     PDSCH 7

Carrier 4 DCI B (4, 4) → PDSCH 3

Carrier 5    PDSCH 4

Monitoring occasion n    Monitoring occasion n+k

FIG. 11

FIG. 12

FIG. 13

| Second HARQ-ACK codebook | | First HARQ-ACK codebook | | |
|---|---|---|---|---|
| HARQ feedback information of a PDSCH scheduled by using DCI D | HARQ feedback information of a PDSCH scheduled by using DCI E | HARQ feedback information of a PDSCH scheduled by using DCI A | HARQ feedback information of a PDSCH scheduled by using DCI B | HARQ feedback information of a PDSCH scheduled by using DCI C |

FIG. 14

FIG. 15

(C-DAI, T-DAI)            (C-DAI, T-DAI)

Carrier 0   DCI A (1, 2)  →  PDSCH 1

PDSCH 0

Carrier 1   PDSCH 2   DCI C (3, 4) → PDSCH 5

Carrier 2   DCI B (2, 2) → PDSCH 3

Carrier 3   PDSCH 6

Carrier 4   PDSCH 4   DCI D (4, 4)  PDSCH 7   PDSCH 8

Carrier 5

Monitoring occasion n      Monitoring occasion n+k

FIG. 15A

Communication apparatus 1600

Processing unit 1610

Transceiver unit 1620

FIG. 16

Communication apparatus 1700

Processor 1710

Interface circuit 1720

Memory 1730

FIG. 17

## INTERNATIONAL SEARCH REPORT

| | International application No. |
|---|---|
| | **PCT/CN2023/112333** |

### A. CLASSIFICATION OF SUBJECT MATTER

H04L5/00(2006.01)i; H04L1/18(2023.01)i

According to International Patent Classification (IPC) or to both national classification and IPC

### B. FIELDS SEARCHED

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNTXT, WPABS, ENTXT, ENTXTC, CNKI, 3GPP: 混合自动重传请求, 确认, 码本, 反馈, 下行控制信息, 调度, 多, 小区, 载波, 下行分配索引, 下行分配指示, 总, 顺序, 次序, 排序, 排列, HARQ, ACK, codebook, feedback, DCI, schedul+, multi+, cell, carrier, DAI, T-DAI

### C. DOCUMENTS CONSIDERED TO BE RELEVANT

| Category* | Citation of document, with indication, where appropriate, of the relevant passages | Relevant to claim No. |
|---|---|---|
| X | WO 2022086888 A1 (YI YUNJUNG et al.) 28 April 2022 (2022-04-28)<br>claims 1-187, and description, paragraphs [0196]-[0319] | 1-20 |
| X | WO 2022015936 A2 (QUALCOMM INC.) 20 January 2022 (2022-01-20)<br>description, paragraphs [0077]-[0341] | 1-20 |
| A | WO 2020220359 A1 (GUANGDONG OPPO MOBILE TELECOMMUNICATIONS CORP., LTD.) 05 November 2020 (2020-11-05)<br>entire document | 1-20 |
| A | US 2020266937 A1 (QUALCOMM INC.) 20 August 2020 (2020-08-20)<br>entire document | 1-20 |
| A | VIVO. "Discussion on Multi-Cell Scheduling"<br>*3GPP TSG RAN WG1 #109-e R1-2203583*, 20 May 2022 (2022-05-20),<br>entire document | 1-20 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 October 2023** | **01 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/112333**

| Patent document cited in search report | | | Publication date (day/month/year) | Patent family member(s) | | | Publication date (day/month/year) |
|---|---|---|---|---|---|---|---|
| WO | 2022086888 | A1 | 28 April 2022 | EP | 4229794 | A1 | 23 August 2023 |
| | | | | CN | 116711251 | A | 05 September 2023 |
| WO | 2022015936 | A2 | 20 January 2022 | EP | 4183092 | A2 | 24 May 2023 |
| | | | | US | 2022022235 | A1 | 20 January 2022 |
| | | | | CN | 115804033 | A | 14 March 2023 |
| WO | 2020220359 | A1 | 05 November 2020 | EP | 3934143 | A1 | 05 January 2022 |
| | | | | KR | 20210145799 | A | 02 December 2021 |
| | | | | US | 2022014317 | A1 | 13 January 2022 |
| | | | | CN | 113302864 | A | 24 August 2021 |
| | | | | CN | 113794540 | A | 14 December 2021 |
| US | 2020266937 | A1 | 20 August 2020 | US | 2021250135 | A1 | 12 August 2021 |
| | | | | US | 2021006363 | A1 | 07 January 2021 |
| | | | | WO | 2020167612 | A1 | 20 August 2020 |
| | | | | JP | 2022520366 | A | 30 March 2022 |
| | | | | KR | 20210124251 | A | 14 October 2021 |
| | | | | EP | 3925117 | A1 | 22 December 2021 |
| | | | | CN | 113412596 | A | 17 September 2021 |

Form PCT/ISA/210 (patent family annex) (July 2022)

**REFERENCES CITED IN THE DESCRIPTION**

**Patent documents cited in the description**

- CN 202210963819

- CN 202211213951